# EUROPEAN PATENT APPLICATION

(11) **EP 4 717 832 A1**
(43) Date of publication of application: **01.04.2026**
(21) Application number: 25201912.0
(22) Date of filing: 12.09.2025
(51) Int. Cl.: E02F 9/26

(54) **CONTROL METHOD OF WORKING MACHINE, WORKING MACHINE CONTROL PROGRAM, WORKING MACHINE CONTROL SYSTEM, AND WORKING MACHINE**

(30) Priority: 30.09.2024 JP 2024170302
(71) Applicant: Yanmar Holdings Co., Ltd., Osaka-shi, Osaka (JP)
(72) Inventor: KAWAGUCHI, Daisuke, Fukuoka (JP); ONO, Junya, Fukuoka (JP)
(74) Representative: Novagraaf International SA

(57) **Abstract**

[Problem] To provide a control method of a working machine, a working machine control program, a working machine control system, and a working machine that make it easy for an operator to recognize an attachment being mounted.

[Solution] A control method of a working machine is a control method of a working machine capable of replacing an attachment of a working unit. This control method includes displaying, on a display device, attachment information Im22 related to the attachment being mounted at the time of startup of the working machine by a startup manipulation.

## Description

### TECHNICAL FIELD

The present invention relates to a control method of a working machine, a working machine control program, and a working machine control system used for a working machine, and a working machine.

### BACKGROUND ART

As a related art, a working machine such as a hydraulic excavator including an electric lever-type manipulation device is known (see, for example, Patent Document 1). In the related art, the manipulation device includes a cross-manipulated manipulation lever and a potentiometer that detects a manipulation direction and a manipulation amount of the manipulation lever. Then, when the manipulation lever is manipulated, the potentiometer detects the manipulation amount and outputs an electric manipulation signal corresponding to the manipulation amount to a controller.

The controller controls hydraulic actuators by controlling control valves (electromagnetic proportional valves) to drive each part of the working machine. Here, the operation of the working machine with respect to the manipulation of the manipulation device can be changed by changing data related to a control characteristic for each of the plurality of the hydraulic actuators.

### PRIOR ART DOCUMENT

### PATENT DOCUMENT

Patent Document 1: JP 2007-332563 A

### SUMMARY OF INVENTION

### TECHNICAL PROBLEM

In the working machine according to the related art described above, for example, it is conceivable that a boom mounted on the tip of a working unit (arm) is replaced with another attachment such as an auger or a fork. However, for an operator riding on the working machine, there is no means for recognizing the attachment being mounted.

An object of the present invention is to provide a control method of a working machine, a working machine control program, a working machine control system, and a working machine that make it easy for an operator to recognize an attachment being mounted.

### SOLUTION TO PROBLEM

A control method of a working machine according to an aspect of the present invention is a control method of a working machine capable of replacing an attachment of a working unit. The control method includes displaying, on a display device, attachment information related to the attachment being mounted at the time of startup of the working machine by a startup manipulation.

A working machine control program according to an aspect of the present invention is a program for causing one or more processors to execute the control method of a working machine.

A working machine control system according to an aspect of the present invention is used for a working machine capable of replacing an attachment of a working unit, and includes a display processing unit. The display processing unit displays, on a display device, attachment information related to the attachment being mounted at the time of startup of the working machine by a startup manipulation.

A working machine according to an aspect of the present invention includes the working machine control system and a machine body.

### ADVANTAGEOUS EFFECTS OF INVENTION

According to the present invention, it is possible to provide the control method of a working machine, the working machine control program, the working machine control system, and the working machine that easily suppress working machine movement not intended by an operator.

### BRIEF DESCRIPTION OF DRAWINGS

Fig. 1 is a schematic perspective view illustrating an overall configuration of a working machine according to a first embodiment;
Fig. 2 is a schematic block diagram of the working machine according to the first embodiment;
Fig. 3 is a schematic external view of a manipulation device of the working machine according to the first embodiment;
Fig. 4 is a diagram illustrating an example of a home screen displayed by a working machine control system according to the first embodiment;
Fig. 5 is a schematic diagram illustrating an example of a manipulation pattern of the working machine according to the first embodiment;
Fig. 6 is a diagram illustrating an example of a setting screen displayed by the working machine control system according to the first embodiment;
Fig. 7 is a diagram illustrating an example of the setting screen displayed by the working machine control system according to the first embodiment;
Fig. 8 is a diagram illustrating an example of the setting screen displayed by the working machine control system according to the first embodiment;
Fig. 9 is a diagram illustrating an example of the setting screen displayed by the working machine control system according to the first embodiment;
Fig. 10 is a diagram illustrating an example of the setting screen displayed by the working machine control system according to the first embodiment;
Fig. 11 is a diagram illustrating an example of screen transition of the setting screen displayed by the working machine control system according to the first embodiment;
Fig. 12 is a diagram illustrating an example of screen transition of the setting screen displayed by the working machine control system according to the first embodiment;
Fig. 13 is a diagram illustrating an example of screen transition at the time of startup of a display screen displayed by the working machine control system according to the first embodiment;
Fig. 14 is a diagram illustrating an example of screen transition at the time of startup of the display screen displayed by the working machine control system according to the first embodiment; and
Fig. 15 is a diagram illustrating an example of the home screen displayed by the working machine control system according to the first embodiment.

### DESCRIPTION OF EMBODIMENTS

Hereinafter, embodiments of the present invention will be described with reference to the accompanying drawings. The following embodiments are examples embodying the present invention, and are not intended to limit the technical scope of the present invention.

### (First Embodiment)

### [1] Overall Configuration

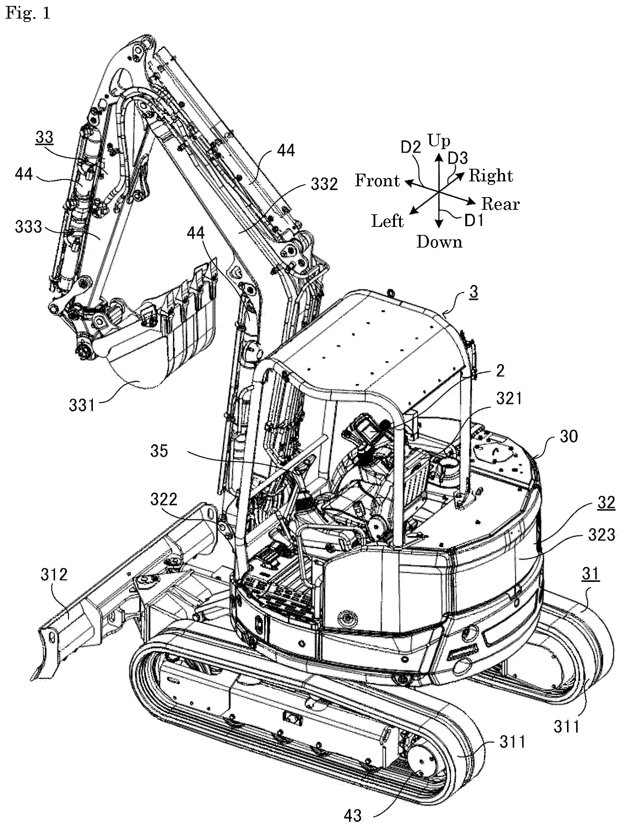

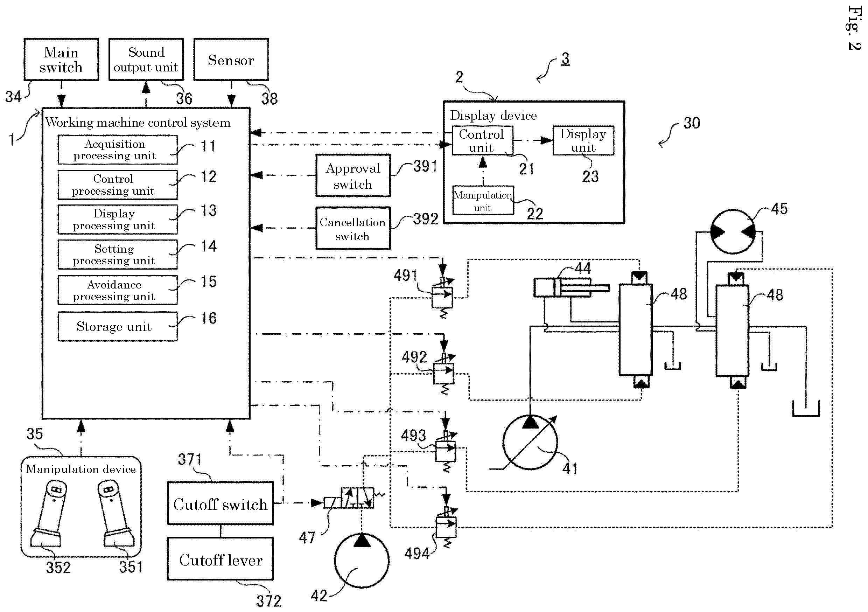

As illustrated in Fig. 1, a working machine 3 according to the present embodiment includes a traveling unit 31, a turning unit 32, and a working unit 33 in a machine body 30. Moreover, as illustrated in Fig. 2, the working machine 3 further includes a working machine control system 1 (hereinafter, also simply referred to as "control system 1"). In addition, as illustrated in Figs. 1 and 2, the machine body 30 further includes a display device 2, a main switch 34, a manipulation device 35, a sound output unit 36, a sensor 38, an approval switch 391, a cancellation switch 392, a cutoff switch 371, and a cutoff lever 372.

The "working machine" in the present disclosure means various machines for work, and is, for example, a working vehicle such as a backhoe (including a hydraulic excavator and a mini excavator), a wheel loader, and a carrier. The working machine 3 includes the working unit 33 configured to be able to execute one or more types of work.

The working machine 3 is not limited to a "vehicle", and may be, for example, a working ship or a working flying object such as a drone or a multicopter. Furthermore, the working machine 3 is not limited to a construction machine, and may be, for example, an agricultural machine such as a rice transplanter, a tractor, or a combine. **In** the present embodiment, unless otherwise specified, a case will be described as an example in which the working machine 3 is a riding-type backhoe, and can execute excavation work, ground leveling work, groove excavation work, loading work, or the like as work. More specifically, in the working machine 3 according to the present embodiment, it is assumed that the turning unit 32 including the working unit 33 is of an "ultra-tight turning type" in which the full turning is possible within 120% of the entire width of the traveling unit 31 (the entire width of a pair of left and right crawlers 311), or of a "rear ultra-tight turning type" in which the rear end turning radius ratio is within 120%.

Moreover, in the present embodiment, for convenience of description, a vertical direction in a state where the working machine 3 can be used is defined as an up-and-down direction D1. Furthermore, in a non-turning state of the turning unit 32, a front-rear direction D2 and a left-right direction D3 are defined with reference to a direction viewed from a user (operator) riding on (a driving unit 321 of) the working machine 3. In other words, each direction used in the present embodiment is a direction defined with reference to the machine body 30 of the working machine 3, and a direction in which the machine body 30 moves when the working machine 3 moves forward is "forward", and a direction in which the machine body 30 moves when the working machine 3 moves rearward is "rearward". Similarly, a direction in which the front end portion of the machine body 30 moves when the working machine 3 turns right is "rightward", and a direction in which the front end portion of the machine body 30 moves when the working machine 3 turns left is "leftward". However, these directions are not intended to limit the directions of use (directions during use) of the working machine 3.

The working machine 3 includes an engine serving as a power source. In the present embodiment, as an example, the engine is a diesel engine. The engine is driven by fuel (here, light oil) supplied from a fuel tank. In the working machine 3, for example, a hydraulic pump 41 (see Fig. 2) is driven by the engine, and hydraulic oil is supplied from the hydraulic pump 41 to hydraulic actuators (including a hydraulic motor 43 and a hydraulic cylinder 44) of units of the machine body 30, so that the machine body 30 is driven. Such a working machine 3 is controlled, for example, by the user (operator) riding on the driving unit 321 of the machine body 30 through manipulation of manipulation levers 351 and 352 (see Fig. 2) or the like of the manipulation device 35.

In the present embodiment, since it is assumed that the working machine 3 is a riding-type backhoe as described above, the working unit 33 is driven in accordance with the manipulation of the user (operator) riding on the driving unit 321 and executes work such as excavation work. The driving unit 321 on which the user rides is provided in the turning unit 32.

In the example of Fig. 1, the driving unit 321 of a canopy type is exemplified, but the driving unit 321 may be of a cabin type. The driving unit 321 of the cabin type includes a cabin, and the user rides in a cabin space inside the cabin. The driving unit 321 of the canopy type includes a canopy (roof), and the user rides in a space below the canopy. Furthermore, the driving unit 321 is not limited to the cabin type and the canopy type, and may be, for example, a floor type or the like that does not include a cabin and a canopy, and that allows the user to ride in a space opened upward.

Here, the display device 2 and the manipulation device 35 are mounted on the driving unit 321 of the machine body 30, and the user can manipulate the manipulation device 35 while viewing various types of information related to the working machine 3 and displayed on the display device 2. As an example, information related to an operating state of the working machine 3 such as a cooling water temperature and a hydraulic oil temperature is displayed on a display screen of the display device 2, so that the user can confirm, with the display device 2, the information related to the operating state of the working machine 3 necessary for the manipulation of the manipulation device 35.

The traveling unit 31 has a traveling function and is configured to be able to travel (including turn) on the ground. The traveling unit 31 includes, for example, the pair of left and right crawlers 311 and a blade 312. The traveling unit 31 further includes the traveling hydraulic motor 43 (hydraulic actuator) for driving the crawlers 311.

The turning unit 32 is located above the traveling unit 31, and is configured to be able to turn about a rotation axis along the vertical direction with respect to the traveling unit 31. The turning unit 32 includes a hydraulic motor 45 (see Fig. 2) as a turning hydraulic actuator. In addition to the driving unit 321, an engine, the hydraulic pump 41, and the like are mounted on the turning unit 32. Furthermore, a boom bracket 322 to which the working unit 33 is attached is provided at the front end portion of the turning unit 32.

The working unit 33 is configured to be able to execute one or more types of work. The working unit 33 is supported by the boom bracket 322 of the turning unit 32 and executes work. The working unit 33 includes an attachment 331 including a bucket. The attachment 331 is an attachment (work tool) attached to the machine body 30 of the working machine 3, and includes an arbitrary instrument selected from a plurality of types of attachments according to the content of work. As an example, the attachment 331 is detachably attached to the machine body 30 and replaced according to the content of work. Examples of the (end) attachment 331 for the working machine 3 include, in addition to the bucket, various tools such as a breaker, an auger, a crusher, a fork, a fork claw, a steel cutter, an asphalt cutting machine, a mower, a ripper, a mulcher, a tilt rotator, and a tamper.

The working unit 33 further includes a boom 332, an arm 333, and hydraulic actuators (including the hydraulic cylinder 44 and a hydraulic motor). The attachment 331 is attached to the tip of the arm 333. The attachment 331 is supported so as to be rotatable about a rotation axis along a horizontal direction with respect to the arm 333.

The boom 332 is rotatably supported by the boom bracket 322 of the turning unit 32. Specifically, the boom 332 is supported by the boom bracket 322 so as to be rotatable about the rotation axis along the horizontal direction. The boom 332 has a shape extending upward from a base end portion supported by the boom bracket 322. The arm 333 is coupled to the tip of the boom 332. The arm 333 is supported so as to be rotatable about a rotation axis along the horizontal direction with respect to the boom 332.

The working unit 33 operates by receiving power from the engine as a power source. Specifically, the hydraulic pump 41 is driven by the engine, and hydraulic oil is supplied from the hydraulic pump 41 to the hydraulic actuators (hydraulic cylinder 44 and the like) of the working unit 33, so that parts (attachment 331, boom 332, and arm 333) of the working unit 33 operate.

In particular, in the present embodiment, the working unit 33 has an articulated structure in which the boom 332 and the arm 333 are individually rotatable. That is, when each of the boom 332 and the arm 333 rotates about the rotation axis along the horizontal direction, for example, the articulated working unit 33 including the boom 332 and the arm 333 can be extended or folded as a whole. Furthermore, the bucket as the attachment 331 is supported to the machine body 30 (turning unit 32) via the boom 332 and the arm 333, and the bucket (attachment 331) itself rotates with respect to the arm 333, so that opening and closing operation of the bucket (attachment 331) is possible.

Similarly to the working unit 33, each of the traveling unit 31 and the turning unit 32 operates by receiving power from the engine as a power source. That is, hydraulic oil is supplied from the hydraulic pump 41 to the hydraulic motor 43 of the traveling unit 31, the hydraulic motor 45 of the turning unit 32, and the like, so that the turning unit 32 and the traveling unit 31 operate.

Moreover, the working machine 3 further includes a drive device (mechanism) such as a power take-off (PTO) for supplying power to the attachment 331. Specifically, the drive device sends the hydraulic oil from the hydraulic pump 41 driven by the engine to the attachment 331, and adjusts the amount of power supplied to the attachment 331 by adjusting a flow rate of the hydraulic oil. Here, the drive device has a plurality of (four as an example in the present embodiment) PTO ports, that is, output ports (hereinafter, referred to as a "PTO 1", a "PTO 2", a "PTO 3", and a "PTO 4"). The PTO 1 to the PTO 4 can individually adjust power, that is, the flow rate of hydraulic oil.

Fig. 2 schematically illustrates a hydraulic circuit and an electric circuit (electrical connection relationship) of the working machine 3 according to the present embodiment. In Fig. 2, the solid line indicates a high pressure oil passage (for hydraulic oil), the dotted line indicates a low pressure oil passage (for pilot oil), and the dashed-dotted arrow indicates a path of an electric signal.

As illustrated in Fig. 2, the working machine 3 includes a pilot pump 42, first control valves 491 to 494, a second control valve 47, and direction switching valves (control valves) 48 in addition to the hydraulic pump 41, the hydraulic cylinder 44, and the hydraulic motor 45. Although only one hydraulic cylinder 44 for driving the boom 332 is illustrated in Fig. 2, a similar hydraulic circuit is configured for the hydraulic cylinder 44 for driving the arm 333, the attachment 331, or the like. Moreover, although only the hydraulic motor 45 of the turning unit 32 is illustrated in Fig. 2, a similar hydraulic circuit is configured for the hydraulic motor 43 of the traveling unit 31.

The hydraulic oil from the hydraulic pump 41 driven by the engine is supplied to the hydraulic motor 43 of the traveling unit 31, the hydraulic motor 45 of the turning unit 32, the hydraulic cylinder 44 of the working unit 33, and the like.

As a result, hydraulic actuators such as the hydraulic motors 43 and 45 and the hydraulic cylinder 44 are driven.

The hydraulic actuators such as the hydraulic motors 43 and 45 and the hydraulic cylinder 44 are provided with the direction switching valve 48 of a pilot type capable of switching the direction and flow rate of the hydraulic oil from the hydraulic pump 41. The direction switching valve 48 is driven by being supplied with pilot oil as an input command from the pilot pump 42.

Here, the first control valves 491 to 494 are provided in the supply path of the pilot oil to the direction switching valves 48. Each of the first control valves 491 to 494 is formed of an electromagnetic control valve (electromagnetic valve), and is inserted between the direction switching valve 48 and the pilot pump 42. Each of the first control valves 491 to 494 is connected to the control system 1 and operates according to a control signal (supply current) from the control system 1. Specifically, the control system 1 controls the first control valves 491 to 494 according to the manipulation of the manipulation device 35, and instructs, for example, an expanding operation, a contracting operation, and the like of the working unit 33. Each of the first control valves 491 to 494 is herein assumed to be an (electromagnetic) proportional control valve, but is not limited thereto, and may be, for example, an on-off valve capable of switching between opening and closing of a flow path.

The direction switching valve and the first control valve are provided not only in the hydraulic cylinder 44 for driving the boom 332 and the hydraulic motor 45 of the turning unit 32 but also in the hydraulic circuits of the hydraulic cylinder 44 for driving the arm 333, the attachment 331, or the like and the hydraulic motor 43 of the traveling unit 31. Therefore, the traveling unit 31, the turning unit 32, and the working unit 33 can operate according to the manipulation of the manipulation device 35.

Furthermore, the second control valve 47 is provided on the upstream side of the pilot oil as viewed from the first control valves 491 to 494. The second control valve 47 is formed of an electromagnetic control valve (electromagnetic valve), and is inserted between the pilot pump 42 and the plurality of first control valves 491 to 494. The second control valve 47 is connected to a power supply via the cutoff switch 371, and operates according to a supply current from the power supply. Here, the second control valve 47 opens the flow path of the pilot oil in an energized state, that is, in a state where a current as a control signal is supplied, and shuts off the flow path of the pilot oil in a non-energized state, that is, in a state where the current as the control signal is cut off. Therefore, when the supply current to the second control valve 47 is cut off, the hydraulic actuator (hydraulic cylinder 44 or the like) cannot be driven, and the hydraulic actuator is forcibly stopped regardless of the manipulation of the manipulation device 35.

The cutoff switch 371 is linked to the cutoff lever 372. The cutoff lever 372 is disposed in the driving unit 321 of the machine body 30 and receives a manipulation input by the user (operator). In the present embodiment, as an example, the cutoff lever 372 can be manipulated along the up-and-down direction D1. When the cutoff lever 372 is at a "raised position", which is an upper end position of a movable range, the cutoff switch 371 is "off", and when the cutoff lever 372 is at a "lowered position", which is a lower end position of the movable range, the cutoff switch 371 is "on". Then, the cutoff switch 371 is connected to the control system 1, and on/off of the cutoff switch 371 is monitored by the control system 1.

Therefore, when the cutoff lever 372 is at the "lowered position", the second control valve 47 is in the energized state, and the hydraulic actuator (hydraulic cylinder 44 or the like) is driven by the manipulation of the manipulation device 35. On the other hand, when the cutoff lever 372 is at the "raised position", the second control valve 47 is in the non-energized state, and the hydraulic actuator is forcibly stopped regardless of the manipulation of the manipulation device 35. Therefore, in order to drive the hydraulic actuator (hydraulic cylinder 44 or the like), the user (operator) needs to manipulate the cutoff lever 372 to the "lowered position".

Furthermore, since each of the turning unit 32 and the traveling unit 31 also operates when the hydraulic oil is supplied from the hydraulic pump 41 to the hydraulic actuators (hydraulic motors 43 and 45 and the like), the turning unit 32 and the traveling unit 31 also cannot be driven when the cutoff lever 372 is at the "raised position". That is, when the cutoff lever 372 is at the "raised position", all of the working unit 33, the turning unit 32, and the traveling unit 31 are forcibly brought into an undrivable state.

In short, the cutoff switch 371 is in a "locked state", when turned off, in which the operation of the working machine 3 is restricted (including prohibited), and is in an "unlocked state", when turned on, in which the operation of the working machine 3 is not restricted. Then, when the cutoff lever 372 is at the "raising position" and the cutoff switch 371 is in the locked state (off), the operation of the working machine 3 is forcibly restricted regardless of the manipulation of the manipulation device 35. The cutoff lever 372 is a lever that is manipulated when the operation of the working machine 3 is locked in this manner, and has the same meaning as a gate lock lever.

As described above, the cutoff switch 371 and the cutoff lever 372 are examples of a locking device. The locking device is a device capable of switching between the locked state in which the operation of the working machine 3 is restricted and the unlocked state in which the operation of the working machine 3 is not restricted. That is, when the cutoff lever 372 is at the "raised position", the locking device is in the "locked state" and restricts the operation of the working machine 3, and when the cutoff lever 372 is at the "lowered position", the locking device is in the "unlocked state" and does not restrict the operation of the working machine 3.

The main switch 34 is disposed in the driving unit 321 of the machine body 30, and is manipulated by the user (operator) at the time of startup of the working machine 3. While the main switch 34 is off, the machine body 30 (including the traveling unit 31, the turning unit 32, and the working unit 33) does not operate according to the manipulation of the manipulation device 35, and only after the main switch 34 is turned on, the machine body 30 operates according to the manipulation of the manipulation device 35. Moreover, when the main switch 34 is turned on, energization of the display device 2 and the like is also started. **In** the present embodiment, as an example, the main switch 34 is linked to a key cylinder, and is turned on when a startup manipulation (ignition on) of the engine is performed using a key.

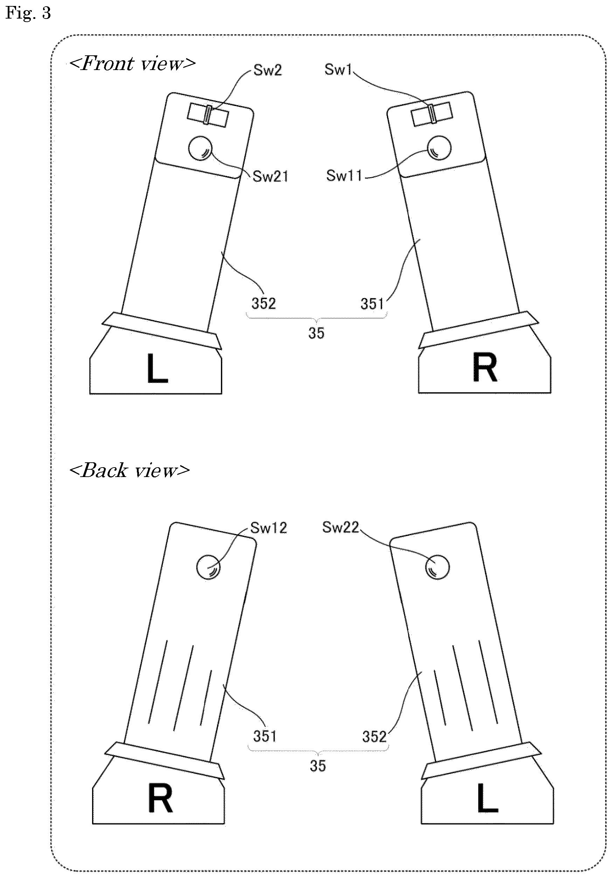

The manipulation device 35 is disposed in the driving unit 321 of the machine body 30, and is a user interface for receiving a manipulation input by the user (operator). The manipulation device 35 is an electric manipulation device 35, and receives various manipulations by the user by outputting an electric signal (manipulation signal) according to the manipulation of the user to the control system 1. **In** the present embodiment, as an example, the manipulation device 35 includes the pair of manipulation levers 351 and 352 (see Fig. 3).

The manipulation device 35 will be described in detail in the section of "[2] Manipulation Device".

The sound output unit 36 outputs a sound (including a voice) to the user (operator). The sound output unit 36 includes a buzzer or a speaker, and receives an electric signal and outputs a sound. The sound output unit 36 is connected to the control system 1 and outputs a sound such as a beep sound or a voice according to a sound control signal from the control system 1. In the present embodiment, the sound output unit 36 is provided in the driving unit 321 of the machine body 30 similarly to the display device 2. The sound output unit 36 may be provided integrally with the display device 2.

The sensor 38 includes, for example, a sensor for detecting the attitude of each part of the machine body 30, such as a boom angle sensor, an arm angle sensor, a bucket angle sensor, a machine body tilt sensor, and a turning angular velocity sensor. The boom angle sensor detects a rotation angle (boom angle) of the boom 332 with respect to the turning unit 32. The boom angle is minimized when the boom 332 is lowered to the lowest position in the movable range, and increases as the boom 332 is raised. The arm angle sensor detects a rotation angle (arm angle) of the arm 333 with respect to the boom 332. The arm angle is minimized when the arm 333 is folded the most, and increases as the arm 333 is extended by arm out. The bucket angle sensor detects a rotation angle (bucket angle) of the bucket (attachment 331) with respect to the arm 333. The bucket angle is minimized when the bucket (attachment 331) is closed the most, and increases as the bucket (attachment 331) is opened. These sensors include an acceleration sensor, a gyro sensor, a potentiometer, a stroke sensor, a rotary encoder, or a combination thereof. An attitude detecting unit 39 outputs detection results of the boom angle and the like to the control system 1 in real time.

The sensor 38 further includes an image sensor (camera) or the like that captures a peripheral image of the machine body 30. The camera is provided, for example, in the turning unit 32, and is configured to be able to capture an image of the periphery (at least one of forward, rearward, leftward, rightward, upward, and downward directions) of the machine body 30. The image captured by the camera may be any of a black-and-white image, an infrared image, and a full-color image, or may be any of a still image and a moving image. In the present embodiment, as an example, the camera captures a rearward image (peripheral image) of the machine body 30 as a full-color moving image, and outputs image data of the peripheral image to the control system 1 in real time.

The approval switch 391 and the cancellation switch 392 are disposed in the driving unit 321 of the machine body 30, and are manipulation units that receive the manipulation of the user (operator). The approval switch 391 and the cancellation switch 392 are disposed at positions where it is easy for the operator to manipulate the switches, such as in front of the driver's seat in the driving unit 321.

The approval switch 391 and the cancellation switch 392 are electrically connected to the control system 1, and receive the manipulation of the user by outputting an electric signal (manipulation signal) according to the manipulation of the user to the control system 1. In the present embodiment, as an example, both the approval switch 391 and the cancellation switch 392 are momentary push button switches.

Here, the approval switch 391 receives the manipulation of the user (operator) for approving a change in various settings or the like. The cancellation switch 392 receives the manipulation of the user for disabling an "interference avoidance function" described later. The functions of the approval switch 391 and the cancellation switch 392 will be described in detail in the section of "[4] Control Method of Working Machine".

The control system 1 mainly includes, for example, a computer system including one or more processors such as a central processing unit (CPU) and one or more memories such as a read only memory (ROM) and a random access memory (RAM), and executes various types of processing (information processing). In the embodiment, the control system 1 is an integrated controller that controls the entire working machine 3, and includes, for example, an electronic control unit (ECU).

However, the control system 1 may be provided separately from the integrated controller, or may mainly include one processor or a plurality of processors. The control system 1 will be described in detail in the section of "[3] Configuration of Control System".

The display device 2 is disposed in the driving unit 321 of the machine body 30, and is a user interface for receiving a manipulation input by the user (operator) and outputting various types of information to the user. The display device 2 receives various manipulations by the user, for example, by outputting an electric signal according to the manipulation of the user. As a result, the user (operator) can visually recognize the display screen displayed on the display device 2, and can manipulate the display device 2 as necessary.

As illustrated in Fig. 2, the display device 2 includes a control unit 21, a manipulation unit 22, and a display unit 23. The display device 2 is configured to be able to communicate with the control system 1, and can exchange data with the control system 1. In the present embodiment, as an example, the display device 2 is a dedicated device used for the working machine 3.

The control unit 21 controls the display device 2 in accordance with data from the control system 1. Specifically, the control unit 21 outputs an electric signal according to the manipulation of the user received by the manipulation unit 22, and displays the display screen generated by the control system 1 on the display unit 23.

The manipulation unit 22 is a user interface for receiving a manipulation input by the user (operator) to the display screen displayed on the display unit 23. The manipulation unit 22 receives various manipulations by the user, for example, by outputting an electric signal according to the manipulation of the user. The manipulation unit 22 includes, for example, a mechanical (push button) switch, a touch panel, and a manipulation dial.

The display unit 23 is a user interface for presenting information to the user (operator), such as a liquid crystal display or an organic EL display that displays various types of information. The display unit 23 presents various types of information to the user by display.

Moreover, in addition to the above-described configuration, the machine body 30 further includes a communication terminal, a fuel tank, and a battery.

### [2] Manipulation Device

Next, the configuration of the manipulation device 35 will be described in detail with reference to Fig. 3. As described above, the manipulation device 35 includes the pair of manipulation levers 351 and 352.

As illustrated in "front view" of Fig. 3, the manipulation lever 351 is located on the right hand side as viewed from the operator riding on the driving unit 321, and the manipulation lever 352 is located on the left hand side as viewed from the operator riding on the driving unit 321. Therefore, for example, the operator holds the manipulation lever 351 with the right hand and the manipulation lever 352 with the left hand, and manipulates the pair of manipulation levers 351 and 352 to cause the working machine 3 to execute various operations. In the present embodiment, the pair of manipulation levers 351 and 352 is an example of a "first manipulation element" in the manipulation device 35.

Each of the manipulation levers 351 and 352 is a stick-type manipulation element, and outputs an electric signal (manipulation signal) according to the manipulation by, for example, being manipulated so as to be tilted to any one of "front", "rear", "left", and "right" from a neutral position. As an example, the manipulation device 35 outputs different manipulation signals corresponding to a manipulation of tilting the manipulation lever 351 forward, a manipulation of tilting the manipulation lever 351 rightward, a manipulation of tilting the manipulation lever 352 forward, and a manipulation of tilting the manipulation lever 352 rightward.

Furthermore, when the manipulation levers 351 and 352, which are the first manipulation element, are manipulated, the manipulation device 35 outputs an electric signal (manipulation signal) according to the manipulation amount (tilt amount) of the manipulation levers 351 and 352. As a result, as an example, when it is assumed that the arm 333 is bent in response to the manipulation of tilting the manipulation lever 352 rearward (to the near side), the driving speed of the arm 333 can be changed according to the manipulation amount (tilt amount) of the manipulation lever 352. That is, as the manipulation amount (tilt amount) of the manipulation lever 352 increases, the flow rate of the hydraulic oil to the hydraulic cylinder 44 for driving the arm 333 increases, and the driving speed of the arm 333 increases.

Moreover, the manipulation device 35 includes a plurality of mechanical switches Sw11, Sw12, Sw21, and Sw22. The switch Sw11 is disposed on the front side of the manipulation lever 351, and the switch Sw12 is disposed on the back side of the manipulation lever 351. The switch Sw21 is disposed on the front side of the manipulation lever 352, and the switch Sw22 is disposed on the back side of the manipulation lever 352. That is, in the present embodiment, the manipulation lever 351 on the right hand side is provided with the switch Sw11 and the switch Sw12 separately on the front and the back of the manipulation lever 351, and the manipulation lever 352 on the left hand side is provided with the switch Sw21 and the switch Sw22 separately on the front and the back of the manipulation lever 352. The plurality of switches Sw11, Sw12, Sw21, and Sw22 are an example of a "second manipulation element" in the manipulation device 35.

That is, the manipulation device 35 includes the first manipulation element (manipulation levers 351 and 352) and the second manipulation element (switches Sw11, Sw12, Sw21, and Sw22). Here, the second manipulation element is a manipulation element manipulated in association with the manipulation of the first manipulation element. That is, the second manipulation element can be manipulated in a mode in which the second manipulation element is associated with the manipulation of the first manipulation element. However, the second manipulation element only needs to be manipulatable in a mode in which the second manipulation element is associated with at least the manipulation of the first manipulation element, and some operation of the machine body 30 may be associated with the manipulation of the second manipulation element alone. In this case, even when the second manipulation element is manipulated alone, the machine body 30 can be caused to perform some operation.

Specifically, in the present embodiment, when the second manipulation element is manipulated simultaneously with the first manipulation element, the second manipulation element is manipulated in association with the manipulation of the first manipulation element. That is, the operator can manipulate the second manipulation element in association with the manipulation of the first manipulation element by manipulating the first manipulation element (manipulation levers 351 and 352) while manipulating the second manipulation element (switches Sw11, Sw12, Sw21, and Sw22). By manipulating the second manipulation element in association with the manipulation of the first manipulation element as described above, it is possible to cause the machine body 30 to execute an operation different from that in a case where the first manipulation element is manipulated alone.

However, not only in a case where the second manipulation element is manipulated simultaneously with the first manipulation element, but also for example, a certain range may be set as the timing at which the second manipulation element is manipulated, such as immediately before or immediately after the first manipulation element is manipulated. As described above, even in a case where there is a time difference between the manipulation time point of the first manipulation element and the manipulation time point of the second manipulation element, when the time difference between both manipulation timings is within a certain period of time, it may be regarded that the second manipulation element has been manipulated in association with the manipulation of the first manipulation element.

Meanwhile, a correspondence relationship between the manipulation of the first manipulation element (manipulation levers 351 and 352) and the operation of the machine body 30 is defined by a "manipulation pattern", and the manipulation pattern is stored in, for example, the memory of the control system 1. Therefore, for example, which part of the machine body 30 performs what operation in response to the manipulation of tilting the manipulation lever 352 rearward (to the near side) is determined by the manipulation pattern.

Moreover, in the present embodiment, the manipulation device 35 includes a plurality of manipulation elements Sw1 and Sw2 for individually manipulating the plurality of output ports (PTO1 to PTO4) of the drive device. The manipulation element Sw1 is disposed on the front side of the manipulation lever 351, and the manipulation element Sw2 is disposed on the front side of the manipulation lever 352. The plurality of manipulation elements Sw1 and Sw2 constitute an "adjustment manipulation element" that adjusts the amount of power (flow rate of hydraulic oil) output from the drive device.

In the present embodiment, as an example, each of the plurality of manipulation elements Sw1 and Sw2 includes a lever switch that can be manipulated to tilt rightward or leftward. In particular, the manipulation elements Sw1 and Sw2 are momentary switches in which the center of a movable range in the left-right direction D3 is set to a neutral position, the manipulation elements Sw1 and Sw2 are tilted rightward or leftward only while a manipulation force is applied, and the manipulation elements Sw1 and Sw2 return to the neutral position when the manipulation force is lost. When the manipulation elements Sw1 and Sw2 are manipulated rightward or leftward, the amount of power (flow rate of hydraulic oil) output from the corresponding output port is determined according to the manipulation amount (tilt amount). Basically, as the manipulation amount of the manipulation elements Sw1 and Sw2 increases, the power output from the corresponding output port increases, that is, the flow rate of the hydraulic oil increases.

Moreover, the manipulation levers 351 and 352 may be reversed in the left-right direction, or may be arranged side by side in the front-rear direction D2 or the up-and-down direction D1. The number of the manipulation levers 351 and 352 may be one. Furthermore, the plurality of switches Sw11 and Sw21 may be disposed, for example, on the side or the back side of the manipulation levers 351 and 352 without limiting to the front side of the manipulation levers 351 and 352. The plurality of switches Sw12 and Sw22 may be disposed, for example, on the side or the front side of the manipulation levers 351 and 352 without limiting to the back side of the manipulation levers 351 and 352. The plurality of switches Sw11, Sw12, Sw21, and Sw22 are not limited to the mechanical push button switches, and may be, for example, touch sensors, lever switches, toggle switches, rocker switches, rotary switches, slide switches, encoders, or the like.

Each of the manipulation elements Sw1 and Sw2 is not limited to the lever switch, and may be, for example, a toggle switch, a rocker switch, a rotary switch, a slide switch, an encoder, or the like. Moreover, the manipulation device 35 may include a manipulation element other than the plurality of switches Sw11, Sw12, Sw21, and Sw22 and the manipulation elements Sw1 and Sw2 described above in the manipulation levers 351 and 352, and the manipulation elements Sw1 and Sw2 can be appropriately omitted.

### [3] Configuration of Control System

Next, the configuration of the control system 1 according to the present embodiment will be described with reference to Fig. 2. The control system 1 controls each unit of the machine body 30 (including the traveling unit 31, the turning unit 32, and the working unit 33) according to manipulation on the manipulation device 35. In the present embodiment, the manipulation device 35 is mounted on the machine body 30 of the working machine 3 as described above. The control system 1 is a component of the working machine 3, and constitutes the working machine 3 together with the machine body 30 and the like. In other words, the working machine 3 according to the present embodiment includes at least the control system 1 and the machine body 30.

As illustrated in Fig. 2, the control system 1 includes an acquisition processing unit 11, a control processing unit 12, a display processing unit 13, a setting processing unit 14, an avoidance processing unit 15, and a storage unit 16. In the present embodiment, as an example, since the control system 1 mainly includes the computer system including one or more processors, the plurality of functional units (acquisition processing unit 11 and the like) are realized by the one or more processors executing a working machine control program. The plurality of functional units included in the control system 1 may be provided in a plurality of housings in a distributed manner, or may be provided in one housing.

The control system 1 is configured to be able to communicate with a device provided in each unit of the machine body 30. That is, at least the display device 2, the main switch 34, the manipulation device 35, the sound output unit 36, the sensor 38, the approval switch 391, the cancellation switch 392, the first control valves 491 to 494, the cutoff switch 371, and the like are connected to the control system 1. As a result, the control system 1 can control the display device 2, the sound output unit 36, the first control valves 491 to 494, and the like, and can acquire electric signals (manipulation signals and the like) from the display device 2, the main switch 34, the manipulation device 35, the sensor 38, the approval switch 391, the cancellation switch 392, and the cutoff switch 371. The phrase "be able to communicate" or "can communicate" in the present disclosure means that information (data) can be exchanged directly, or indirectly via a communication network (network), a repeater, or the like, in an appropriate communication system for wired or wireless communication (communication using radio waves or light as a medium).

Therefore, the control system 1 may exchange various types of information (data) directly with each device, or indirectly via, for example, a repeater. As an example, the control system 1 and the device provided in each unit of the machine body 30 can communicate with each other by a communication system such as a controller area network (CAN).

The acquisition processing unit 11 executes, for example, acquisition processing of acquiring electric signals (manipulation signals or the like) or the like from the display device 2, the main switch 34, the manipulation device 35, the sensor 38, the approval switch 391, the cancellation switch 392, and the cutoff switch 371. As an example, the manipulation device 35 including the pair of manipulation levers 351 and 352 outputs a manipulation signal according to the manipulation of the user (operator), so that the acquisition processing unit 11 acquires the manipulation signal. As a result, the acquisition processing unit 11 can acquire a manipulation signal indicating the manipulation content (manipulation direction and manipulation amount) of the manipulation levers 351 and 352, for example, the manipulation of tilting the manipulation lever 351 on the right side forward or the manipulation of tilting the manipulation lever 352 on the left side forward. Similarly, the acquisition processing unit 11 can acquire a manipulation signal indicating the manipulation content (on/off) of each of the plurality of switches Sw11, Sw12, Sw21, and Sw22. The acquisition processing unit 11 is configured to be able to further acquire on/off of each of the main switch 34, the approval switch 391, the cancellation switch 392, and the cutoff switch 371.

The control processing unit 12 executes control processing of controlling the machine body 30 according to the manipulation of the manipulation device 35. In the control processing, the control processing unit 12 executes control of the traveling unit 31, the turning unit 32, the working unit 33, and the like of the machine body 30. Specifically, the control processing unit 12 controls the hydraulic actuators such as the hydraulic motors 43 and 45 and the hydraulic cylinder 44 by outputting a control signal to the first control valves 491 to 494 according to the manipulation of the manipulation device 35 acquired by the acquisition processing unit 11.

Here, the control processing unit 12 executes the control processing in accordance with the manipulation pattern. The "manipulation pattern" in the present disclosure means the correspondence relationship between the manipulation of the manipulation device 35 and the operation of the machine body 30, and includes data indicating a combination of the manipulation of the manipulation device 35 and the operation of the machine body 30. That is, the control processing unit 12 realizes the operation of the machine body 30 according to the manipulation of the manipulation device 35 in accordance with the correspondence relationship between the manipulation of the manipulation device 35 and the operation of the machine body 30 defined as the manipulation pattern.

For example, in a certain manipulation pattern, a manipulation of tilting the manipulation lever 351 on the right side in the manipulation device 35 forward is associated with an operation of lowering the boom 332 in the machine body 30, and a manipulation of tilting the manipulation lever 352 on the left side in the manipulation device 35 rearward is associated with an operation of bending the arm 333 in the machine body 30. In this case, when the acquisition processing unit 11 receives the manipulation of tilting the manipulation lever 351 forward, the control processing unit 12 controls the first control valves 491 to 494 to drive the hydraulic cylinder 44 of the working unit 33 so as to lower the boom 332. Similarly, when the acquisition processing unit 11 receives the manipulation of tilting the manipulation lever 352 rearward, the control processing unit 12 controls the first control valves 491 to 494 to drive the hydraulic cylinder 44 of the working unit 33 so as to bend the arm 333.

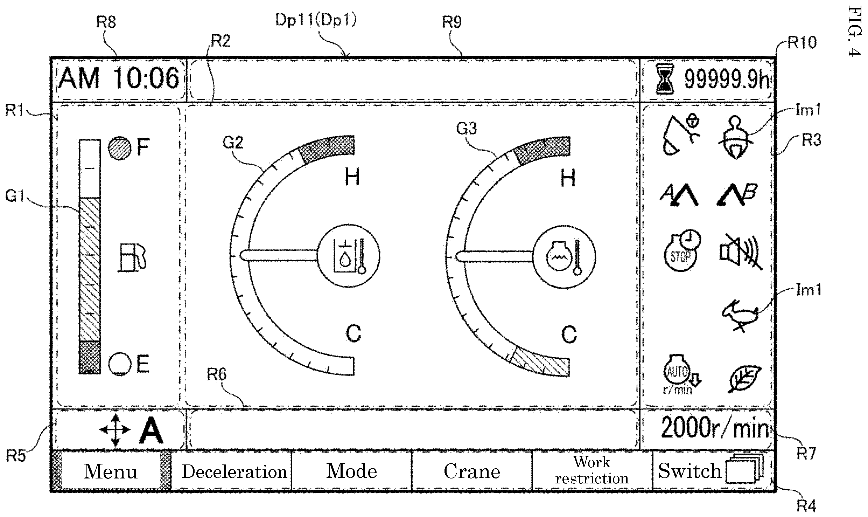

The display processing unit 13 executes display processing of causing the display device 2 to display various display screens Dp1 (see Fig. 4) including information related to the working machine 3. Specifically, the display processing unit 13 generates the display screen Dp1 on the basis of the data or the like acquired by the acquisition processing unit 11, and controls the display device 2 to display the display screen Dp1 on the display unit 23 of the display device 2. Furthermore, the display processing unit 13 operates according to the manipulation received by the manipulation unit 22 of the display device 2.

Here, the information related to the working machine 3 and included in the display screen Dp1 includes, for example, operating information related to an operating state of the working machine 3, such as a remaining amount of fuel, a cooling water temperature, a hydraulic oil temperature, and a hanging weight at the time of hanging work. That is, the display processing unit 13 can cause the display device 2 to display the display screen Dp1 including the operating information related to the operating state of the working machine 3.

The "screen" such as the display screen Dp1 in the present disclosure means a video (image) displayed on the display device 2, and includes an icon, a figure, a photograph, a text, and a moving image. That is, the control system 1 can cause the display device 2 to display the display screen Dp1 including, for example, an icon representing the information related to the operating state of the working machine 3, such as the cooling water temperature and the hydraulic oil temperature. Here, in a case where the display screen Dp1 includes a moving image, the display screen Dp1 includes not a constant video but a video that changes from moment to moment.

The setting processing unit 14 executes setting processing of setting setting information for various setting items related to the working machine 3. That is, the various setting items related to the working machine 3 are not fixed, and can be appropriately set (changed) by the setting processing unit 14. The "setting item" described herein includes, for example, the manipulation pattern and enabling/disabling of a specific function such as the interference avoidance function. That is, the manipulation pattern, which is the correspondence relationship between the manipulation of the manipulation device 35 and the operation of the working machine 3, can be changed by the setting processing unit 14.

Specifically, the manipulation pattern used in the control processing unit 12 is not fixed, and can be arbitrarily changed by the setting processing unit 14. In the present embodiment, as an example, a plurality of manipulation patterns are stored in advance in the storage unit 16 of the control system 1, and the setting processing unit 14 selects, as the "current manipulation pattern", one manipulation pattern from the plurality of manipulation patterns. As described above, the setting processing unit 14 sets the "current manipulation pattern" by selecting one manipulation pattern from the plurality of predetermined manipulation patterns. Therefore, the "current manipulation pattern" is switched by switching the manipulation pattern selected by the setting processing unit 14 among the plurality of manipulation patterns. The control processing unit 12 executes the control processing of controlling the machine body 30 according to the manipulation of the first manipulation element (manipulation levers 351 and 352) of the manipulation device 35 in accordance with the manipulation pattern (current manipulation pattern) set by the setting processing unit 14.

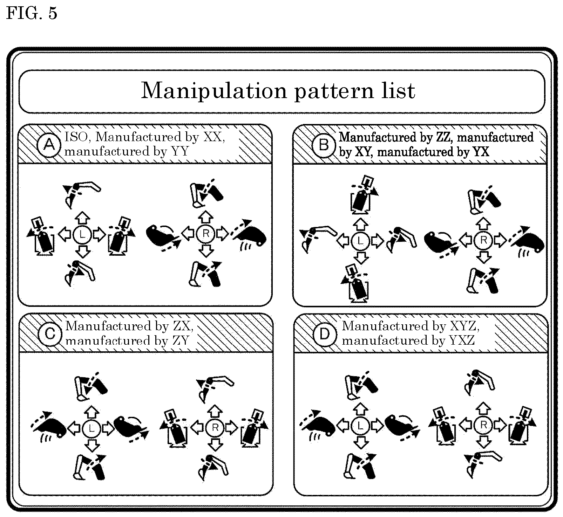

As an example, in a state where four of "Pattern A", "Pattern B", "Pattern C", and "Pattern D" as illustrated in Fig. 5 are stored as the manipulation patterns in the storage unit 16, the setting processing unit 14 selects one of "Pattern A" to "Pattern D" as the "current manipulation pattern". "Pattern A", "Pattern B", "Pattern C", and "Pattern D" are data indicating different correspondence relationships (combinations) between the manipulation of the first manipulation element (manipulation levers 351 and 352) in the manipulation device 35 and the operation of the machine body 30. For example, when the setting processing unit 14 selects "Pattern A" as the manipulation pattern, the control processing unit 12 executes the control processing in accordance with "Pattern A". On the other hand, when the setting processing unit 14 selects "Pattern C" as the manipulation pattern, the control processing unit 12 executes the control processing in accordance with "Pattern C".

The avoidance processing unit 15 executes interference avoidance processing of controlling the operation of the working unit 33 so as to avoid interference of the working unit 33 with the driving unit 321. That is, the working machine 3 according to the present embodiment has the interference avoidance function of controlling the operation of the working unit 33 so as to avoid the interference of the working unit 33 with the driving unit 321.

Specifically, the avoidance processing unit 15 sets a virtual plane away outward from the outermost portion of the driving unit 321 by a predetermined distance in a space, and controls the working unit 33 on the basis of a positional relationship between the position of the attachment 331 of the working unit 33 based on the output of the sensor 38 and the virtual plane. That is, when the operator manipulates the manipulation device 35 to cause the working unit 33 to operate and if the attachment 331 tries to enter the driving unit 321 side beyond the virtual plane, the avoidance processing unit 15 automatically stops the hydraulic actuator (hydraulic cylinder 44 or the like) and forcibly stops the working unit 33. As a result, in a case where the operator manipulates the working machine 3, even if the operator erroneously manipulates the attachment 331 so as to approach very close to the driving unit 321 side, the working unit 33 can be stopped before the attachment 331 comes into contact with the driving unit 321. As a result, the interference of the working unit 33 with the driving unit 321 can be avoided.

The storage unit 16 includes a non-volatile storage device such as a hard disk drive (HDD) or a solid state drive (SSD) that stores various types of information. The storage unit 16 stores a program such as the working machine control program. The working machine control program is provided, for example, by being recorded in a computer-readable non-transitory recording medium, and is read from the non-transitory recording medium by a reading device of the control system 1 and stored in the storage unit 16. The working machine control program may be provided (downloaded) from a server or the like to the control system 1 via an electric communication line and stored in the storage unit 16.

### [4] Control Method of Working Machine

Hereinafter, an example of a control method of the working machine 3 (hereinafter, simply referred to as a "control method") mainly executed by the control system 1 will be described with reference to Figs. 4 to 15.

The control method according to the present embodiment is executed by the control system 1 mainly including the computer system; in other words, the control method is embodied by the working machine control program (hereinafter, simply referred to as a "control program"). That is, the control program according to the present embodiment is a computer program for causing one or more processors to execute the control method. Such a control program may be executed by, for example, the control system 1 and the display device 2 in cooperation with each other.

Here, the control method according to the present embodiment is a control method of the working machine 3 having the interference avoidance function of controlling the operation of the working unit 33 so as to avoid the interference of the working unit 33 with the driving unit 321.

**In** other words, the control system 1 according to the present embodiment is used for the working machine 3 having the interference avoidance function of controlling the operation of the working unit 33 so as to avoid the interference of the working unit 33 with the driving unit 321. That is, in the present embodiment, the avoidance processing unit 15 of the control system 1 executes the interference avoidance processing of controlling the operation of the working unit 33 so as to avoid the interference of the working unit 33 with the driving unit 321, so that an avoidance processing function is realized.

Moreover, the control method according to the present embodiment is a control method of the working machine 3 capable of replacing the attachment 331 of the working unit 33. In other words, the control system 1 according to the present embodiment is used for the working machine 3 capable of replacing the attachment 331 of the working unit 33. That is, in the present embodiment, the avoidance processing unit 15 of the control system 1 executes the interference avoidance processing of controlling the operation of the working unit 33 so as to avoid the interference of the working unit 33 with the driving unit 321, so that an avoidance processing function is realized.

Moreover, the control system 1 executes the following various types of processing related to the control method when a specific start manipulation set in advance for executing the control program is performed. The start manipulation is, for example, a startup manipulation of the engine of the working machine 3, that is, an on manipulation or the like of the main switch 34.

On the other hand, the control system 1 terminates the following various types of processing related to the control method when a specific termination manipulation set in advance is performed. The termination manipulation is, for example, a stop manipulation of the engine of the working machine 3, that is, an off manipulation or the like of the main switch 34.

### Home Screen

Here, the configuration of the display screen Dp1 displayed on the display unit 23 of the display device 2 by the control method according to the present embodiment will be first described. In the drawings illustrating the display screen Dp1 displayed on the display unit 23 of the display device 2 in Fig. 4 and the like, all of the dashed-dotted lines representing regions, the lead lines, and the reference numerals are merely attached for the sake of description, and are not actually displayed on the display device 2.

The display screen Dp1 illustrated in Fig. 4 is a home screen Dp11 displayed by the control method.

The home screen Dp11 is a basic display screen Dp1 to be displayed on the display device 2 in the operating state (state where the machine body 30 operates according to the manipulation of the manipulation device 35 or the like). The display screen Dp1 can transition from the home screen Dp11 to various display screens Dp1 including a menu screen in accordance with a manipulation on the manipulation unit 22.

As illustrated in Fig. 4, the home screen Dp11 includes a first region R1, a second region R2, a third region R3, a fourth region R4, a fifth region R5, a sixth region R6, a seventh region R7, an eighth region R8, a ninth region R9, and a 10th region R10.

Specifically, the display screen Dp1 is divided into four regions in the vertical direction (up-and-down direction).

Then, each of the three regions from the top is further divided into three regions in the lateral direction (left-right direction). As a result, the display screen Dp1 is divided into a total of 10 regions. Then, the second region from the top is the first region R1, the second region R2, and the third region R3 in order from the left. The lowermost region is the fourth region R4. Furthermore, the third region from the top is the fifth region R5, the sixth region R6, and the seventh region R7 in order from the left, and the uppermost region is the eighth region R8, the ninth region R9, and the 10th region R10 in order from the left. The size in the vertical direction is the widest in the second region from the top (first region R1, second region R2, and third region R3) among the four regions divided in the vertical direction. The size in the lateral direction is the widest in the middle region (second region R2, sixth region R6, and ninth region R9) among the three regions divided in the lateral direction.

However, the arrangement and size of each of these regions are merely examples, and can be changed as appropriate. Moreover, it is not essential that the regions are clearly divided by a boundary line. For example, even in the example of Fig. 4, the second region R2 and the third region R3 are clearly divided by a boundary line, but there is no boundary line between the first region R1 and the second region R2. Of course, the first region R1 and the second region R2 may be clearly divided by a boundary line.

The first region R1 is a rectangular region that is long in the longitudinal direction. In the first region R1, for example, remaining amount information G1 related to a remaining amount of fuel (for example, light oil) of the engine is displayed. The display processing unit 13 generates the remaining amount information G1 in the home screen Dp11 on the basis of the output (sensor signal) or the like of a remaining amount sensor acquired by the acquisition processing unit 11. In the present embodiment, the remaining amount information G1 is a graph imitating an analog indicator having a length in the vertical direction.

The second region R2 that occupies most of the home screen Dp11 is a rectangular region that is long in the lateral direction. In the control method according to the present embodiment, the information related to the operating state of the working machine 3 is displayed in the second region R2. As an example, cooling water temperature information G3 and hydraulic oil temperature information G2 are displayed in the second region R2. The display processing unit 13 generates the cooling water temperature information G3 in the home screen Dp11 on the bases of the output (sensor signal) of a cooling water temperature sensor acquired by the acquisition processing unit 11.

Similarly, the display processing unit 13 generates the hydraulic oil temperature information G2 in the home screen Dp11 on the basis of the output (sensor signal) of a hydraulic oil temperature sensor acquired by the acquisition processing unit 11.

In the present embodiment, both the cooling water temperature information G3 and the hydraulic oil temperature information G2 are graphs imitating analog meters. In the analog meter, a needle rotates and the position of the needle indicates a value. That is, the cooling water temperature information G3 is information that indexes the cooling water temperature included in the operating state of the working machine 3 and represents the cooling water temperature by the position of the needle in the graph. Similarly, the hydraulic oil temperature information G2 is information that indexes the hydraulic oil temperature included in the operating state of the working machine 3 and represents the hydraulic oil temperature by the position of the needle in the graph. The cooling water temperature information G3 and the hydraulic oil temperature information G2 may be not only information representing the cooling water temperature and the hydraulic oil temperature by numerical values or the like, but also, for example, information representing the cooling water temperature and the hydraulic oil temperature in stages by a pattern or the like of an icon.

The third region R3 is a rectangular region that is long in the longitudinal direction. In the third region R3, icons Im1 indicating enabling/disabling, abnormality/normality, and the like of each function of the working machine 3 are displayed. In the third region R3, the plurality of icons Im1 can be displayed, and the design (pattern) of each of the icons Im1 indicates which of functions related to, for example, a seat belt, a hydraulic oil temperature, and the like is represented. Here, each of the icons Im1 indicates enabling/disabling and abnormality/normality of each function according to, for example, a display mode such as display/non-display, a display color, or a size. The display processing unit 13 determines the state of each unit of the working machine 3 using the outputs of the various sensors 38 that detect the operating state of each unit of the working machine 3. Then, in a case where any of the functions is enabled, the display processing unit 13 displays that the function is enabled (or in operation) by, for example, changing the display mode of the icon Im1 corresponding to the function. Similarly, in a case where an abnormal value is detected in any part, the display processing unit 13 displays a warning by, for example, changing the display mode such as the display color of the icon Im1 of the part.

The fourth region R4 is a band-shaped region extending over the entire width of the home screen Dp11. In the fourth region R4, items for manipulations on the display screen Dp1 are displayed. In Fig. 4, as an example, a plurality of items such as "Menu", "Deceleration", and "Mode" are arranged side by side in the fourth region R4. A plurality of push button switches of the manipulation unit 22 located immediately below the plurality of items are associated with the plurality of items. For example, when the push button switch corresponding to the item "Menu" is manipulated by the user (operator), the item "Menu" is manipulated (selected).

Furthermore, in the present embodiment, any of the items is highlighted in the fourth region R4 so as to correspond to a manipulation of the manipulation dial (or a cursor key) or the like of the manipulation unit 22.

In the example of Fig. 4, the item "Menu" is highlighted, and the highlighted item is switched by the manipulation of the manipulation dial (or a cursor key) or the like. The user (operator) can select a desired item by operating an enter button in a state where the desired item is highlighted. Therefore, for example, when the enter button is manipulated in a state where the highlight display is moved to the item "Mode", the item "Mode" is manipulated (selected). Moreover, in a case where the manipulation unit 22 includes a touch panel, the user (operator) can select a desired item by a manipulation of touching the desired item on the home screen Dp11.

In the fifth region R5, for example, information related to the current manipulation pattern is displayed. In the sixth region R6, for example, information related to the working unit 33 operating in the working machine 3 is displayed.

In the seventh region R7, for example, information related to the operating state of the working machine 3 such as the rotation speed of the engine is displayed. In the eighth region R8, for example, the current time is displayed. In the ninth region R9, for example, information indicating an item to which the display screen Dp1 that is currently displayed belongs is displayed. In the 10th region R10, for example, information related to the operating time (hour meter) of the working machine 3 is displayed.

### Setting Operation for Manipulation Pattern

Next, a setting operation for the manipulation pattern indicating the correspondence relationship between the manipulation of the manipulation device 35 and the operation of the machine body 30 will be described.

In the present embodiment, as an example, four patterns of "Pattern A", "Pattern B", "Pattern C", and "Pattern D" illustrated in Fig. 5 are stored as manipulation patterns in the storage unit 16, and any manipulation pattern is selected (set) from the four patterns by the setting processing unit 14. In the example of Fig. 5, a manipulation pattern for "ISO, manufactured by XX, manufactured by YY" is prepared as "Pattern A", a manipulation pattern for "manufactured by ZZ, manufactured by XY, manufactured by YX" is prepared as "Pattern B", a manipulation pattern for "manufactured by ZX, manufactured by YZ" is prepared as "Pattern C", and a manipulation pattern for "manufactured by XYZ, manufactured by YXZ" is prepared as "Pattern D".

Fig. 5 schematically illustrates, for each of "Pattern A", "Pattern B", "Pattern C", and "Pattern D", a combination of the manipulation direction of each of the pair of manipulation levers 351 and 352 as the first manipulation element and the operation of the machine body 30.

For example, in the case of "Pattern A", a manipulation of tilting the manipulation lever 351 on the right side forward is associated with an operation of lowering the boom 332 in the machine body 30, a manipulation of tilting the manipulation lever 351 rearward is associated with an operation of raising the boom 332 in the machine body 30, a manipulation of tilting the manipulation lever 351 rightward is associated with an operation of opening the attachment 331 in the machine body 30, and a manipulation of tilting the manipulation lever 351 leftward is associated with an operation of closing (excavating) the attachment 331 in the machine body 30. Furthermore, in the case of "Pattern A", a manipulation of tilting the manipulation lever 352 on the left side forward is associated with an operation of extending the arm 333 in the machine body 30, a manipulation of tilting the manipulation lever 352 rearward is associated with an operation of bending the arm 333 in the machine body 30, a manipulation of tilting the manipulation lever 352 rightward is associated with an operation of turning the turning unit 32 rightward in the machine body 30, and a manipulation of tilting the manipulation lever 352 leftward is associated with an operation of turning the turning unit 32 leftward in the machine body 30.

On the other hand, in the case of "Pattern B", the manipulation of tilting the manipulation lever 352 on the left side forward is associated with the operation of turning the turning unit 32 rightward in the machine body 30, the manipulation of tilting the manipulation lever 352 rearward is associated with the operation of turning the turning unit 32 leftward in the machine body 30, the manipulation of tilting the manipulation lever 352 rightward is associated with the operation of bending the arm 333 in the machine body 30, and the manipulation of tilting the manipulation lever 352 leftward is associated with the operation of extending the arm 333 in the machine body 30.

As described above, the operation of the machine body 30 corresponding to a certain manipulation of the manipulation device 35 (manipulation levers 351 and 352) differs depending on the selected manipulation pattern. In other words, the manipulation of the manipulation device 35 (manipulation levers 351 and 352) for causing the machine body 30 to perform the same operation differs depending on the selected manipulation pattern.

Next, an example of specific processing particularly related to the change of the manipulation pattern in the control method according to the present embodiment will be described in detail.

In the present embodiment, as described above, the setting processing unit 14 of the control system 1 executes the setting processing for setting the manipulation pattern, so that the manipulation pattern, which is the correspondence relationship between the manipulation of the manipulation device 35 and the operation of the machine body 30, can be changed. Here, the setting (change) of the manipulation pattern is performed according to the manipulation of the operator (user). That is, when the operator selects an arbitrary pattern from among "Pattern A", "Pattern B", "Pattern C", and "Pattern D", the current manipulation pattern is changed.

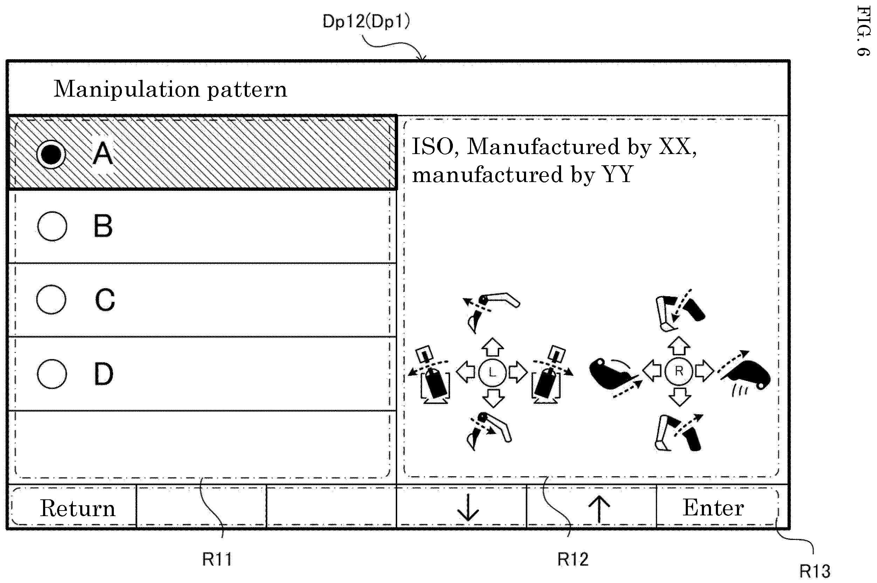

Specifically, as illustrated in Fig. 6, the display processing unit 13 has a function of causing the display device 2 to display a (manipulation pattern) setting screen Dp12 for changing the manipulation pattern. The manipulation pattern selected on the setting screen Dp12 is set as the "current manipulation pattern" by the setting processing unit 14. As a result, the operator can determine the manipulation pattern, which is the correspondence relationship between the manipulation of the manipulation device 35 (manipulation levers 351 and 352 or the like) and the operation of the machine body 30, while visually confirming the manipulation pattern on the display device 2.

As an example, as illustrated in Fig. 6, the setting screen Dp12 includes a first region R11, a second region R12, and a third region R13. In the third region R13, cursor items "Up" and "Down", an item "Return" for returning to the previous screen, and an item "Enter" are displayed. In the first region R11, "Pattern A", "Pattern B", "Pattern C", and "Pattern D", which are options of the manipulation pattern, are displayed. In the first region R11, any one of "Pattern A", "Pattern B", "Pattern C", and "Pattern D" is highlighted. The highlighted pattern is switched by the manipulation of the cursors in the third region R13. Furthermore, a radio button is associated with each of "Pattern A", "Pattern B", "Pattern C", and "Pattern D", and the radio button corresponding to the pattern being selected is brought into an "on" state. In the example of Fig. 6, "Pattern A" is highlighted, and "Pattern A" is selected as the manipulation pattern.

In the second region R12, detailed information related to the highlighted manipulation pattern is displayed as post-change pattern information. In the example of Fig. 6, detailed information of the highlighted "Pattern A" is displayed in the second region R12. Here, the detailed information as the post-change pattern information includes an icon indicating the correspondence relationship between the manipulation of the manipulation device 35 and the operation of the machine body 30. Specifically, the detailed information includes a text "ISO, manufactured by XX, manufactured by YY" and an icon representing a combination of the manipulation direction of each of the pair of manipulation levers 351 and 352 and the operation of the machine body 30.

According to such a setting screen Dp12, the highlighted pattern is switched by the manipulation of the cursors in the third region R13. Accordingly, the detailed information displayed in the second region R12 is also switched to the detailed information of the highlighted pattern. Therefore, the operator can select a desired pattern by manipulating the item "Enter" in a state where the desired pattern is highlighted.

Meanwhile, in the control method according to the present embodiment, a specific manipulation by the operator is required as a condition for the setting processing unit 14 to confirm various settings such as the manipulation pattern. In the present embodiment, the manipulation (pressing manipulation) of the approval switch 391 is an example of the specific manipulation.

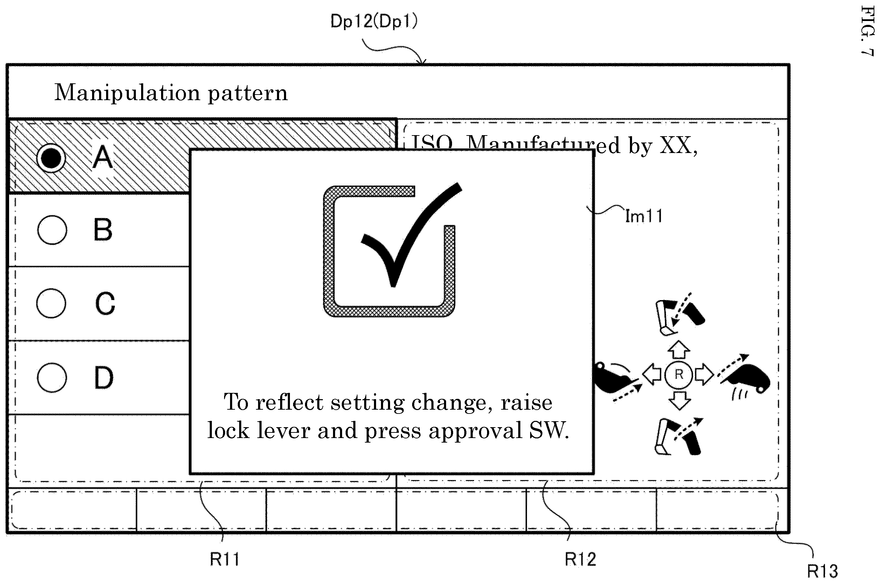

Specifically, when the item "Enter" is manipulated on the setting screen Dp12, the display processing unit 13 displays a first image Im11 as illustrated in Fig. 7 on the display unit 23 of the display device 2. The first image Im11 is an image serving as guidance for the specific manipulation. In the present embodiment, since the manipulation of the approval switch 391 by the operator is an example of the specific manipulation, the first image Im11 includes, for example, a message (text) prompting the manipulation (pressing manipulation) of the approval switch 391, such as "To reflect the setting change, raise the lock lever and press the approval SW". Furthermore, the first image Im11 includes, for example, an icon indicating that the setting is confirmed, such as a check box.

Then, the setting processing unit 14 confirms the setting (change) of the manipulation pattern in response to the specific manipulation of manipulating the approval switch 391 in a state where the first image Im11 is displayed. That is, for the first time, the setting processing unit 14 applies the manipulation pattern (for example, "Pattern A") selected (set) on the setting screen Dp12 as the setting information for the setting item called the manipulation pattern.

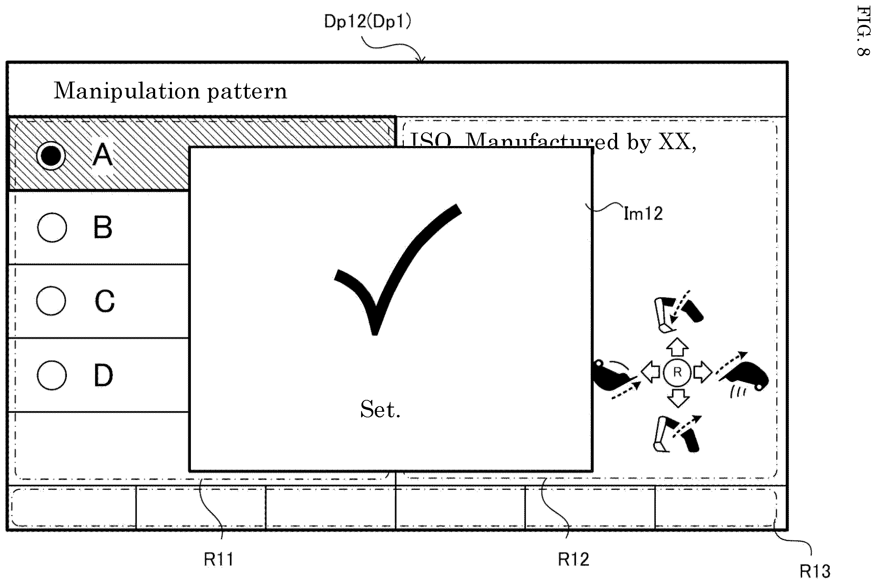

Furthermore, when the setting processing unit 14 applies the setting information, the display processing unit 13 displays a second image Im12 as illustrated in Fig. 8 on the display unit 23 of the display device 2. The second image Im12 is an image indicating successful setting. In the present embodiment, the second image Im12 includes, for example, a message (text) indicating that the setting of the setting information (here, "Pattern A") for the setting item (here, the manipulation pattern) has succeeded (completed), such as "Set". Furthermore, the second image Im12 includes, for example, an icon indicating that the setting has been confirmed, such as a check mark.

As described above, the control method according to the present embodiment includes: displaying, on the display device 2, the setting screen Dp12 for receiving setting information for any of the setting items related to the working machine 3; displaying, on the display device 2, the first image Im11 serving as guidance for the specific manipulation; applying the setting information for the setting item when the specific manipulation is performed; and displaying, on the display device 2, the second image Im11 instead of the first image Im12 when the setting information is applied.

According to this configuration, for example, since the setting information for the setting item such as the manipulation pattern is applied only after the specific manipulation guided on the first image Im11 is performed, it is possible to avoid setting not intended by the operator. Moreover, since the second image Im12 is displayed instead of the first image Im11 when the setting information is applied, the operator can know that the setting information is applied even when the operator unconsciously performs the specific manipulation. As a result, there is an advantage that it is easy to suppress the movement of the working machine 3 not intended by the operator.

Moreover, in the present embodiment, the specific manipulation is performed in a state where the locking device (cutoff switch 371 and cutoff lever 372) capable of switching between the locked state in which the operation of the working machine 3 is restricted and the unlocked state in which the operation of the working machine 3 is not restricted is in the locked state. That is, the specific manipulation can be performed only in a state where the cutoff lever 372 is at the "raised position" and the locking device is in the "locked state". Therefore, when the cutoff lever 372 is at the "lowered position" and the locking device is in the "unlocked state", even if the approval switch 391 is manipulated (press-manipulated), it does not mean that the specific manipulation has been performed, and the setting fails.

As a result, the setting item related to the operation of the working machine 3 can be changed only in the locked state in which the operation of the working machine 3 is restricted, and as a result, it is possible to prevent rapid change of the behavior of the working machine 3 during the operation of the working machine 3.

Moreover, the first image Im11 is displayed when a predetermined manipulation is performed while the setting screen Dp12 is displayed. In the present embodiment, when the manipulation unit 22 of the display device 2 is manipulated and the item "Enter" on the setting screen Dp12 is selected, the first image Im11 is displayed on the display unit 23 of the display device 2. That is, the manipulation of the manipulation unit 22 of the display device 2 for selecting the item "Enter" on the setting screen Dp12 is an example of the predetermined manipulation.

As a result, the predetermined manipulation is required in addition to the specific manipulation until the setting information is set for the setting item, and thus it is easier to avoid setting not intended by the operator.

Furthermore, the specific manipulation is performed on a manipulation unit different from a manipulation unit for the predetermined manipulation. That is, the specific manipulation is the manipulation of the approval switch 391 provided separately from the display device 2, and the setting information is applied to the setting item only after the approval switch 391 different from the manipulation unit 22 (of the display device 2) for the predetermined manipulation is manipulated.

As a result, it is necessary for the operator to manipulate separate manipulation units (manipulation unit 22 and approval switch 391) until the setting information is set for the setting item, and thus it is easier to avoid setting not intended by the operator.

Moreover, the first image Im11 is displayed superimposed on the setting screen Dp12. In the present embodiment, as illustrated in Fig. 7, the first image Im11 is superimposed and displayed on the setting screen Dp12 by a pop-up window across the first region R11 and the second region R12 of the setting screen Dp12. That is, the first image Im11 is displayed superimposed on the setting screen Dp12 by pop-up display.

As a result, it is easy for the operator to understand that the first image Im11 is the guidance for the specific manipulation related to the setting item (here, the manipulation pattern) being set on the setting screen Dp12, leading to improvement of operability.

Moreover, in the present embodiment, the second image Im12 is also displayed superimposed on the setting screen Dp12. In the present embodiment, as illustrated in Fig. 8, the second image Im12 is superimposed and displayed on the setting screen Dp12 by a pop-up window across the first region R11 and the second region R12 of the setting screen Dp12 similarly to the first image Im11. That is, the second image Im12 is displayed superimposed on the setting screen Dp12 by pop-up display.

As a result, it is easy for the operator to understand that the second image Im12 is an image indicating the success (completion) of the setting related to the setting item (here, the manipulation pattern) being set on the setting screen Dp12, leading to improvement of operability.

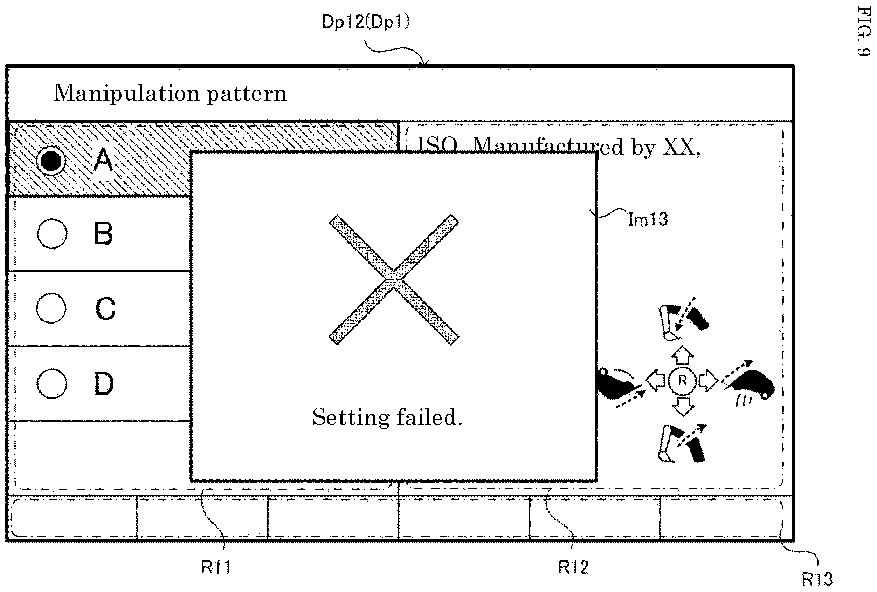

Moreover, as illustrated in Fig. 9, the control method according to the present embodiment further includes displaying, on the display device 2, a third image Im13 instead of the first image Im11 when the setting information is not applied. That is, for example, when the setting processing unit 14 fails to apply the setting information, the display processing unit 13 displays the third image Im13 as illustrated in Fig. 9 on the display unit 23 of the display device 2.

The third image Im13 is an image indicating failed setting. In the present embodiment, the third image Im13 includes, for example, a message (text) indicating that the setting of the setting information (here, "Pattern A") for the setting item (here, the manipulation pattern) has failed, such as "Setting failed". Furthermore, the third image Im13 includes an icon indicating that the setting has failed, such as a cross mark.

As a result, it is easy for the operator to understand that the second image Im12 is an image indicating the success (completion) of the setting related to the setting item (here, the manipulation pattern) being set on the setting screen Dp12, leading to improvement of operability. Here, examples of a situation in which the third image Im13 is displayed include a case where the approval switch 391 is not manipulated within a display duration (for example, several seconds) in which the first image Im11 is displayed (timeout), and a case where the approval switch 391 is manipulated in the unlocked state of the locking device.

Furthermore, periods of time (display durations) during which the second image Im12 and the third image Im13 are displayed on the display device 2 are preferably determined in advance. The display durations (for example, several seconds) of the second image Im12 and the third image Im13 may be different from each other or may be the same. Furthermore, the display duration of the second image Im12 and the third image Im13 may be different from or the same as the display duration of the first image Im11. When the display duration of the second image Im12 or the third image Im13 elapses, the pop-up display of the second image Im12 or the third image Im13 ends, and the display returns to the display of the setting screen Dp12.

Here, when the third image Im13 is displayed, notification of the reason why the setting information is not applied may be performed. That is, for example, when the application of the setting information fails because the approval switch 391 is manipulated in the unlocked state of the locking device, the operator is notified that the cutoff lever 372 is at the "lowered position" or that the cutoff lever 372 is set to the "raised position" and the approval switch 391 is manipulated again by appropriate means.

As a result, when the application of the setting information fails, the operator can know the reason, and the application of the setting information is more likely to succeed by performing the specific manipulation again. The notification means for the reason why the setting information is not applied may be, for example, the third image Im13 or other display, or sound output by the sound output unit 36.

Meanwhile, the manipulation unit on which the specific manipulation is performed is common to a plurality of setting items. That is, in the present embodiment, the setting items include, for example, settings such as the attachment 331 being mounted, sensor calibration, and enabling/disabling of the interference avoidance function, in addition to the manipulation pattern. Then, for each of the plurality of setting items, the specific manipulation by the operator is required as a condition for the setting processing unit 14 to apply the setting information (that is, to confirm the setting).

As described above, since the manipulation unit (here, the approval switch 391) on which the specific manipulation is performed is common to the plurality of setting items, it is easy for the operator to perform an approval manipulation for the setting, leading to improvement of operability.

### Setting Operation for Attachment Being Mounted, and Sensor Calibration

Next, a setting operation for the attachment 331 being mounted and sensor calibration will be described.

As described above, in both the attachment 331 being mounted and the sensor calibration, the setting processing unit 14 applies the setting information (that is, confirms the setting) on the condition of the specific manipulation on the manipulation unit (here, the approval switch 391) common to the manipulation pattern.

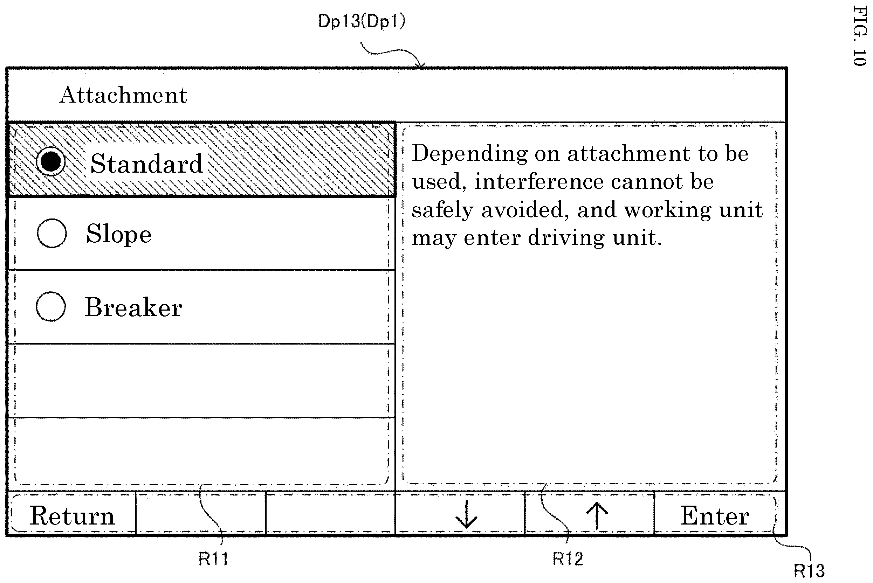

Specifically, as illustrated in Fig. 10, the display processing unit 13 has a function of causing the display device 2 to display an (attachment) setting screen Dp13 for setting (changing) the attachment 331 being mounted on the working unit 33. The attachment 331 selected on the setting screen Dp13 is set as "attachment being mounted" by the setting processing unit 14. As a result, the operator can set the attachment 331 being mounted on the working unit 33 while visually confirming the attachment on the display device 2.

As an example, as illustrated in Fig. 10, the setting screen Dp13 includes the first region R11, the second region R12, and the third region R13. In the first region R11, "Standard", "Slope", and "Breaker", which are options of the attachment 331, are displayed. In the first region R11, any one of "Standard", "Slope", and "Breaker" is highlighted. The highlighted attachment 331 is switched by the manipulation of the cursors in the third region R13. Furthermore, a radio button is associated with each of "Standard", "Slope", and "Breaker", and the radio button corresponding to the attachment 331 being selected is brought into the "on" state. In the example of Fig. 10, "Standard" (bucket) is highlighted, and "Standard" is selected as the attachment 331 being mounted.

In the second region R12, detailed information related to the highlighted attachment 331 is displayed as post-change pattern information. In the example of Fig. 10, a message (text) as the detailed information (caution information) of the attachment 331, such as "Depending on the attachment to be used, interference cannot be safely avoided, and the working unit may enter the driving unit", is displayed in the second region R12.

According to such a setting screen Dp13, the highlighted attachment 331 is switched by the manipulation of the cursors in the third region R13. Accordingly, the detailed information displayed in the second region R12 is also switched to the detailed information of the highlighted attachment 331. Therefore, the operator can select a desired attachment 331 by manipulating the item "Enter" in a state where the desired attachment 331 is highlighted.

Meanwhile, in the control method according to the present embodiment, a specific manipulation by the operator is required as a condition for the setting processing unit 14 to confirm the setting of the attachment 331 being mounted. In the present embodiment, the manipulation (pressing manipulation) of the approval switch 391 is an example of the specific manipulation.

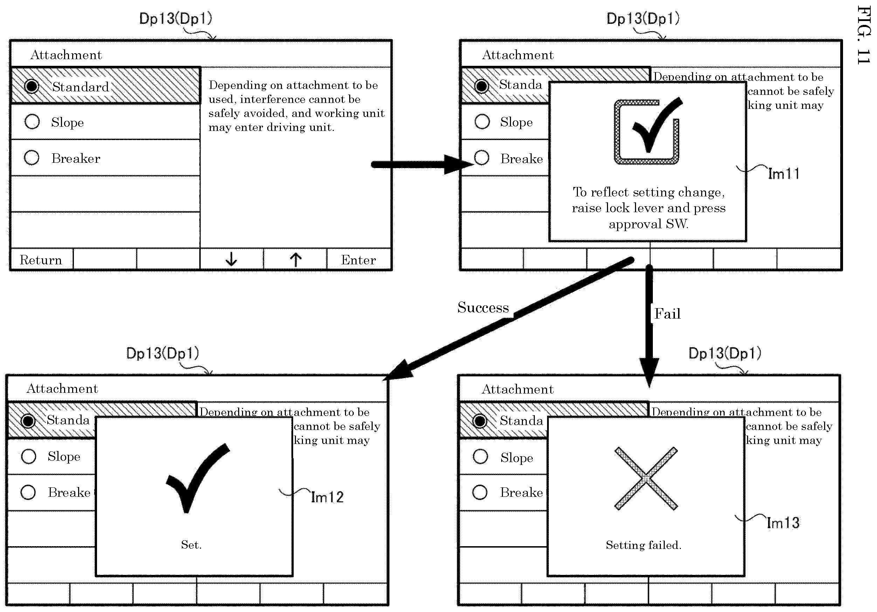

Specifically, the display screen Dp1 displayed on the display unit 23 of the display device 2 transitions as illustrated in Fig. 11. That is, when the item "Enter" is manipulated on the setting screen Dp13, the display processing unit 13 displays the first image Im11 as illustrated in the upper right of Fig. 11 on the display unit 23 of the display device 2. In this state, when the operator manipulates the approval switch 391 as the specific manipulation and the setting is successful, the second image Im12 as illustrated in the lower left of Fig. 11 is displayed on the display unit 23 of the display device 2. On the other hand, when the setting fails, the third image Im13 as illustrated in the lower right of Fig. 11 is displayed on the display unit 23 of the display device 2.

In the present embodiment, a similar operation is performed in sensor calibration. The "sensor calibration" described herein is an initial setting of the various sensors 38, and may be performed only in a mechanical mode by a special command.

A (sensor) setting screen Dp14 for the sensor calibration also requires a specific manipulation by the operator as a condition for the setting processing unit 14 to apply the setting information of the sensor 38. In the present embodiment, the manipulation (pressing manipulation) of the approval switch 391 is an example of the specific manipulation.

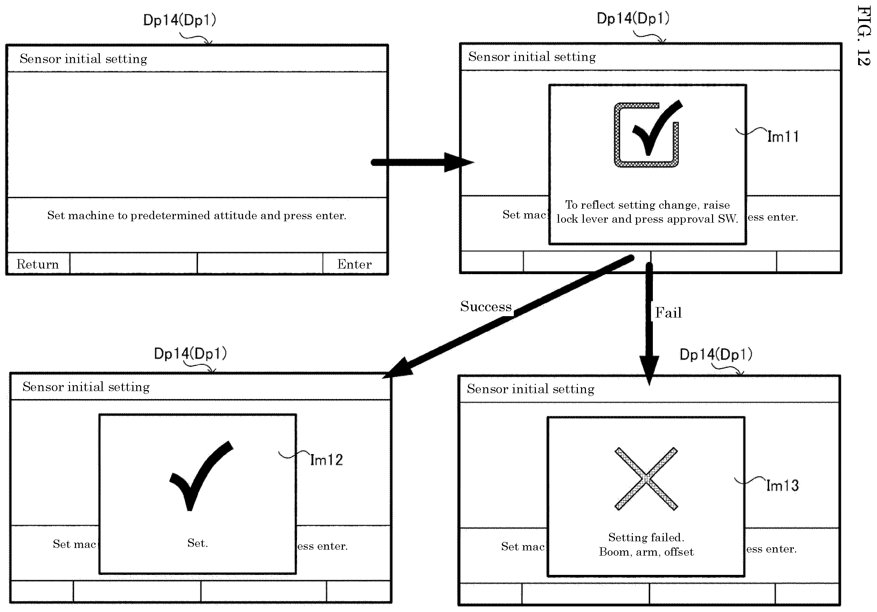

Specifically, the display screen Dp1 displayed on the display unit 23 of the display device 2 transitions as illustrated in Fig. 12. That is, when the item "Enter" is manipulated on the setting screen Dp14, the display processing unit 13 displays the first image Im11 as illustrated in the upper right of Fig. 12 on the display unit 23 of the display device 2. In this state, when the operator manipulates the approval switch 391 as the specific manipulation and the setting is successful, the second image Im12 as illustrated in the lower left of Fig. 12 is displayed on the display unit 23 of the display device 2. On the other hand, when the setting fails, the third image Im13 as illustrated in the lower right of Fig. 12 is displayed on the display unit 23 of the display device 2.

### Operation at Time of Startup

Next, the display screen Dp1 displayed on the display unit 23 of the display device 2 by the control method according to the present embodiment when a startup manipulation of the working machine 3 (a startup manipulation of the engine) is performed to start up the working machine 3 will be described.

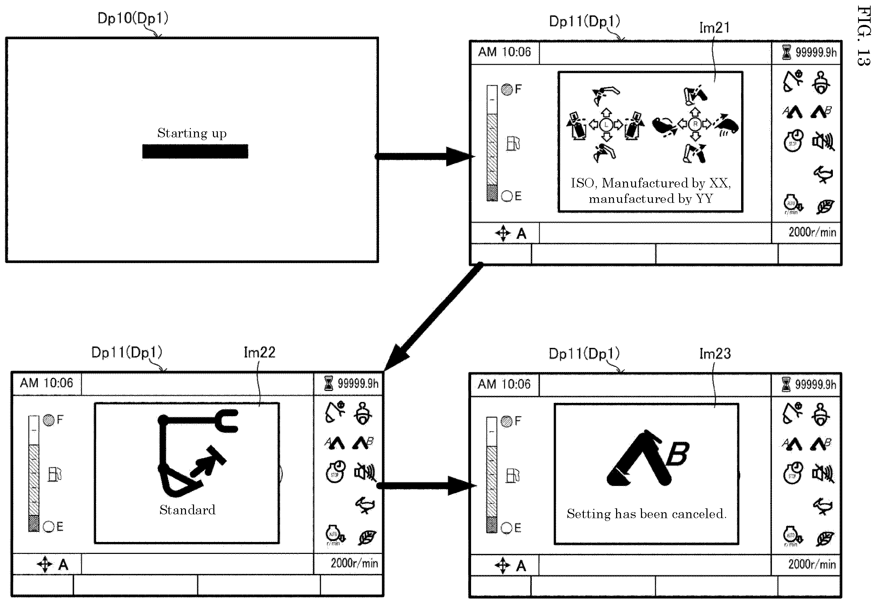

In the present embodiment, the on manipulation (key-on) of the main switch 34 is an example of the startup manipulation. That is, when the on manipulation is performed on the main switch 34, the working machine 3 is started up. At this time, the display device 2 is also started up, and the display screen Dp1 displayed on the display unit 23 of the display device 2 transitions, for example, as illustrated in Fig. 13.

That is, the display processing unit 13 first displays a start screen Dp10 on the display unit 23 of the display device 2 as illustrated in the upper left of Fig. 13. The start screen Dp10 is the display screen Dp1 that is first displayed on the display device 2 after the startup of the working machine 3, and includes, for example, a logo of a manufacturer of the working machine 3.

In this state, when the display duration (for example, 2 seconds) of the start screen Dp10 elapses, the display processing unit 13 displays the home screen Dp11 on the display unit 23 of the display device 2 as illustrated in the upper right of Fig. 13. At this time, the display processing unit 13 displays specific information Im21 superimposed on the home screen Dp11. The specific information Im21 is superimposed and displayed on the home screen Dp11 by a pop-up window in the second region R2 of the home screen Dp 11. That is, the specific information Im21 is displayed superimposed on the home screen Dp11 by pop-up display. The specific information Im21 is some information related to the working machine 3, and in the present embodiment, as an example, an image indicating the current manipulation pattern is displayed as the specific information Im21.

In this state, when the display duration (for example, 3 seconds) of the specific information Im21 elapses, the display processing unit 13 displays attachment information Im22 instead of the specific information Im21 on the display unit 23 of the display device 2 as illustrated in the lower left of Fig. 13. At this time, the display processing unit 13 displays the attachment information Im22 superimposed on the home screen Dp11. The attachment information Im22 is superimposed and displayed on the home screen Dp11 by a pop-up window in the second region R2 of the home screen Dp11. That is, the attachment information Im22 is displayed superimposed on the home screen Dp11 by pop-up display.

The attachment information Im22 is information related to the attachment 331 currently mounted on the working unit 33, and in the present embodiment, as an example, an image and a text for specifying the attachment 331 being mounted are displayed as the attachment information Im22. In the example of Fig. 13, since the bucket is being mounted as the attachment 331, the attachment information Im22 indicating "Standard" is displayed.

In this state, when the display duration (for example, 3 seconds) of the attachment information Im22 elapses, the display processing unit 13 displays disabling confirmation information Im23 instead of the attachment information Im22 on the display unit 23 of the display device 2 as illustrated in the lower right of Fig. 13. At this time, the display processing unit 13 displays the disabling confirmation information Im23 superimposed on the home screen Dp11. The disabling confirmation information Im23 is superimposed and displayed on the home screen Dp11 by a pop-up window in the second region R2 of the home screen Dp11. That is, the disabling confirmation information Im23 is displayed superimposed on the home screen Dp11 by pop-up display.

The disabling confirmation information Im23 is information indicating that a specific function is disabled, and in the present embodiment, as an example, an image and a text indicating that the specific function is automatically disabled by automatic disabling processing are displayed as the disabling confirmation information Im23.

The "specific function" described herein includes, for example, a limiting function that limits the movable range of the working unit 33 to a limited position. Specifically, this type of limiting function includes a boom height limiting function and an arm winding limiting function in addition to the interference avoidance function described above. The boom height limiting function is a function of limiting the upper end of the movable range of the working unit 33 in the up-and-down direction D1 to a height limited position by defining the upper end of the movable range of the boom 332. The arm winding limiting function is a function of limiting a limit position in the winding (bending direction) of the arm 333 to a winding limited position.

In the example of Fig. 13, it is assumed that the boom height limiting function as the specific function is disabled by the automatic disabling processing, and thus, an image and a text indicating that the boom height limiting function is disabled are displayed as the disabling confirmation information Im23.

The "automatic disabling processing" in the present disclosure is processing of automatically disabling the specific function when a predetermined cancellation condition is satisfied. That is, the setting processing unit 14 automatically disables the specific function such as the boom height limiting function when the cancellation condition is satisfied.

In the present embodiment, as an example, the cancellation condition for disabling the boom height limiting function includes a stop manipulation of the working machine 3 in a state where at least the specific function (boom height limiting function) is enabled. In the present embodiment, the off manipulation (key-off) of the main switch 34 is an example of the stop manipulation. That is, when the off manipulation is performed on the main switch 34 in a state where the boom height limiting function is enabled, the setting processing unit 14 disables the boom height limiting function by the automatic disabling processing. In this case, when the off manipulation is subsequently performed on the main switch 34 to start up the working machine 3, the disabling confirmation information Im23 indicating that the boom height limiting function is disabled is displayed on the display unit 23 of the display device 2 as illustrated in Fig. 13.

In this state, when the display duration (for example, 3 seconds) of the disabling confirmation information Im23 elapses, the display processing unit 13 ends the pop-up display of the disabling confirmation information Im23 and displays the home screen Dp11 on the display unit 23 of the display device 2. Periods of time (display durations) during which the start screen Dp10, the specific information Im21, the attachment information Im22, and the disabling confirmation information Im23 are displayed on the display device 2 are preferably determined in advance, and may be different from each other or may be the same.

In the example of Fig. 13, the start screen Dp10, the specific information Im21, and the attachment information Im22 are always displayed at the time of startup, whereas the disabling confirmation information Im23 is displayed only after the automatic disabling processing is executed.

As described above, the control method according to the present embodiment is a control method of the working machine 3 capable of replacing the attachment 331 of the working unit 33, and includes displaying, on the display device 2, the attachment information Im22 related to the attachment 331 being mounted at the time of startup of the working machine 3 by the startup manipulation.

According to this configuration, when the attachment 331 mounted on the tip of the working unit 33 (arm 333) is replaced with various attachments 331 such as a boom, an auger, or a fork, the operator riding on the working machine 3 can recognize the attachment 331 being mounted. That is, when the working machine 3 is started up by the startup manipulation (on manipulation of the main switch 34), the operator can recognize the attachment 331 being mounted by the attachment information Im22 displayed on the display device 2. As a result, there is an advantage that the operator can easily recognize the attachment 331 being mounted.

Moreover, the control method according to the present embodiment further includes adjusting, on the basis of the attachment information Im22, the interference avoidance function of controlling the operation of the working unit 33 so as to avoid the interference of the working unit 33 with the driving unit 321. That is, since it is necessary to limit the movable range of the working unit 33 on the basis of the attachment 331 being mounted, the avoidance processing unit 15 executes the interference avoidance processing on the basis of the attachment information Im22.

As a result, it is possible to activate the interference avoidance function while securing an appropriate movable range corresponding to the attachment 331 being mounted.

Moreover, the working machine 3 can operate even while the attachment information Im22 is displayed. Specifically, in the example of Fig. 13, the working machine 3 can operate according to the manipulation of the manipulation device 35 from a time point when the home screen Dp11 (and the specific information Im21) is displayed.

As a result, the working machine 3 can operate without waiting for the end of the display of the attachment information Im22, and a delay in the startup of the working machine 3 due to the display of the attachment information Im22 can be avoided.

Moreover, the control method according to the present embodiment further includes displaying the home screen Dp11 on the display device 2 after the attachment information Im22 is displayed. In the present embodiment, after the attachment information Im22 is displayed, the disabling confirmation information Im23 is displayed, and then the home screen Dp11 is displayed on the display unit 23 of the display device 2.

As a result, after the display of the attachment information Im22 ends, the operator can confirm various types of information necessary for the manipulation of the working machine 3 on the home screen Dp11.

Moreover, in the present embodiment, the control method further includes reading the attachment information Im22 into the display device 2 at the time of startup of the working machine 3. Specifically, the acquisition processing unit 11 acquires, from the attachment 331, the attachment information Im22 for specifying at least the type of the attachment at a time point when the attachment 331 is mounted on the working unit 33. Furthermore, the acquisition processing unit 11 acquires, from the attachment 331, the attachment information Im22 for specifying at least the type of the attachment also at the time of startup of the working machine 3. The control system 1 outputs the attachment information Im22 acquired in this manner to the display device 2 at the time of startup of the working machine 3, and causes the display device 2 to display the attachment information Im22.

As a result, for example, even when the attachment 331 is replaced at the time of stopping the working machine 3, it is possible to display the attachment information Im22 related to the attachment 331 mounted at the time point of startup of the working machine 3.

Here, the control method preferably further includes performing informing when the reading of the attachment information Im22 has failed. That is, when the reading of the attachment information Im22 has failed, the informing is performed, so that the operator can know that the reading of the attachment information Im22 has failed. Therefore, the operator is less likely to erroneously recognize the attachment 331 being mounted. The informing means may be, for example, the third image Im13 or other display, or may be sound output by the sound output unit 36.

Moreover, in the present embodiment, the attachment information Im22 is displayed after the display of the start screen Dp 10 that is first displayed on the display device 2 after the startup of the working machine 3. As a result, it is difficult for the operator to overlook the attachment information Im22 as compared with a case where the attachment information Im22 is immediately displayed after the startup of the working machine 3.

Moreover, the attachment information Im22 is displayed after the specific information Im21 is displayed after the display of the start screen Dp10. As a result, it is difficult for the operator to overlook the attachment information Im22 as compared with the case where the attachment information Im22 is immediately displayed after the display of the start screen Dp10.

Moreover, the control method according to the present embodiment further includes changing the manipulation pattern, which is the correspondence relationship between the manipulation of the manipulation device 35 and the operation of the working machine 3. Here, the specific information Im21 is information related to the current manipulation pattern. As a result, when the working machine 3 is started up by the startup manipulation (on manipulation of the main switch 34), the operator can recognize the current manipulation pattern by the specific information Im21 displayed on the display device 2. As a result, an erroneous manipulation is less likely to occur.

Moreover, the control method according to the present embodiment further includes executing the automatic disabling processing, and displaying, on the display device 2, the disabling confirmation information Im23 indicating that the specific function is disabled after the working machine 3 is started up by the startup manipulation after the execution of the automatic disabling processing. Here, the automatic disabling processing is processing of automatically disabling the specific function related to the working machine 3 when the cancellation condition including that the stop manipulation of the working machine 3 is performed in a state where the specific function is enabled is satisfied. In the present embodiment, the boom height limiting function is an example of the specific function.

According to this configuration, the specific function can be automatically disabled by satisfying the cancellation condition including that the stop manipulation of the working machine 3 is performed. Then, in a case where the specific function is automatically disabled by such automatic disabling processing, the disabling confirmation information Im23 is displayed on the display device 2 after the working machine 3 is next started up, so that the operator can grasp that the specific function is automatically disabled by the automatic disabling processing.

Moreover, the cancellation condition may include a condition other than the stop manipulation of the working machine 3. In other words, the cancellation condition is not necessarily satisfied even when the stop manipulation of the working machine 3 is performed in a state where the specific function related to the working machine 3 is enabled, and the specific function is automatically disabled only when the cancellation condition is satisfied including a condition other than the stop manipulation.

Specifically, the cancellation condition includes that a period of time from the stop manipulation of the working machine 3 to the next startup manipulation is a certain period of time or more, and/or that the stop manipulation of the working machine 3 does not involve a holding manipulation of the specific function. As a result, the specific function is not necessarily disabled even when the stop manipulation of the working machine 3 is performed, and the specific function can remain enabled according to the situation.

Moreover, the disabling confirmation information Im23 is displayed only at the time of the first startup of the working machine 3 after the execution of the automatic disabling processing. That is, the disabling confirmation information Im23 is displayed at the time of the first startup of the working machine 3 after the execution of the automatic disabling processing, and the disabling confirmation information Im23 is not displayed at the time of the second and subsequent startup of the working machine 3.

As a result, it is possible to avoid the operator's feeling of being annoyed when the disabling confirmation information Im23 is displayed every time the working machine 3 is started up.

Moreover, the disabling confirmation information Im23 is displayed next to the attachment information Im22. As a result, since the attachment information Im22 and the disabling confirmation information Im23 are sequentially displayed after the working machine 3 is started up, it is difficult for the operator to overlook both the attachment information Im22 and the disabling confirmation information Im23.

Moreover, the attachment information Im22 is displayed on the display device 2 together with the operating information (such as the icon Im1) related to the operating state of the working machine 3. That is, in the present embodiment, the attachment information Im22 is superimposed and displayed on the home screen Dp11 by a pop-up window in the second region R2 of the home screen Dp11. Therefore, for example, the attachment information Im22 is displayed, on the display unit 23 of the display device 2, side by side with the plurality of icons Im1 and the like in the third region R3 of the home screen Dp11.

Therefore, the operator can confirm the operating information related to the operating state of the working machine 3 together with the attachment information Im22 on the display device 2.

### Disabling Startup Processing

Next, disabling startup processing of starting up the working machine 3 in a state where the interference avoidance function is disabled will be described.

That is, the working machine 3 has the interference avoidance function; therefore, when the interference avoidance function is enabled, the operation of the working unit 33 is controlled by the avoidance processing unit 15 so as to avoid the interference of the working unit 33 with the driving unit 321. The interference avoidance function is not always enabled, and enabling/disabling can be set by the setting processing unit 14. Then, when the interference avoidance function is disabled, the operator can manipulate the working unit 33 very close to the driving unit 321 while sufficiently confirming safety.

Here, by performing the startup manipulation (on manipulation of the main switch 34) while manipulating (press-manipulating) the cancellation switch 392, the setting processing unit 14 executes "disabling startup processing" of starting up the working machine 3 in a state where the interference avoidance function is disabled. That is, when the specific condition including that a first manipulation is performed is satisfied at the time of startup of the working machine 3 by the startup manipulation, the setting processing unit 14 enables the working unit 33 to operate in a state where the interference avoidance function is disabled. In the present embodiment, the on manipulation of the main switch 34 is an example of the startup manipulation, and the manipulation (pressing manipulation) of the cancellation switch 392 is an example of the first manipulation.

Furthermore, in the present embodiment, as in a case where the setting processing unit 14 confirms various settings such as the manipulation pattern, a specific manipulation by the operator is required as a condition for disabling the interference avoidance function. In the present embodiment, the manipulation (pressing manipulation) of the approval switch 391 is an example of the specific manipulation.

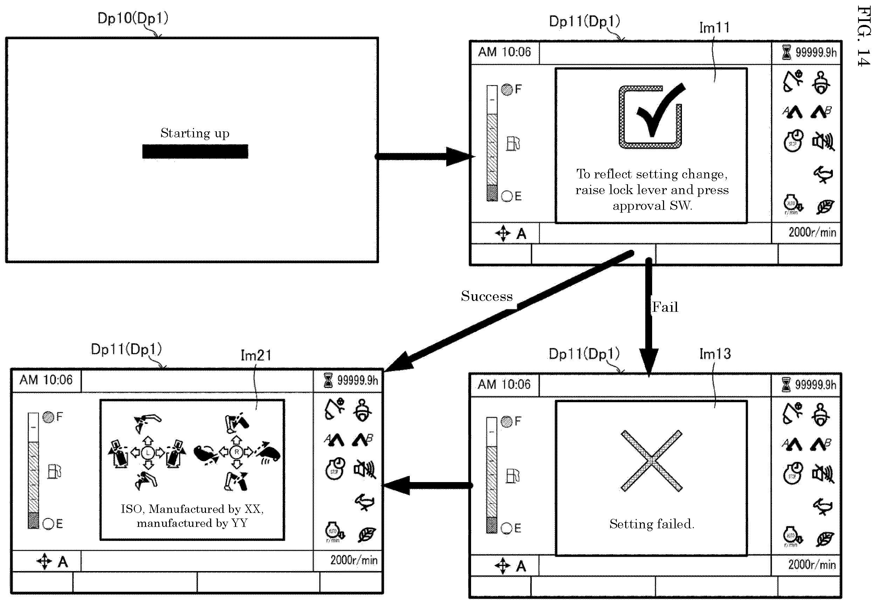

Specifically, in the disabling startup processing, the display screen Dp1 displayed on the display unit 23 of the display device 2 transitions as illustrated in Fig. 14. That is, when the startup manipulation (on manipulation of the main switch 34) is performed while manipulating (press-manipulating) the cancellation switch 392, the display processing unit 13 first displays the start screen Dp10 on the display unit 23 of the display device 2 as illustrated in the upper left of Fig. 14.

In this state, when the display duration (for example, 2 seconds) of the start screen Dp10 elapses, the display processing unit 13 displays the home screen Dp11 on the display unit 23 of the display device 2 as illustrated in the upper right of Fig. 14. At this time, the display processing unit 13 displays the first image Im11 superimposed on the home screen Dp11. The first image Im11 is superimposed and displayed on the home screen Dp11 by a pop-up window in the second region R2 of the home screen Dp11. That is, the first image Im11 is displayed superimposed on the home screen Dp11 by pop-up display.

In this state, when the operator manipulates the approval switch 391 as the specific manipulation and the setting is successful, the specific information Im21 similar to that at the time of normal startup is displayed superimposed on the home screen Dp11 as illustrated in the lower left of Fig. 14. Thereafter, the display screen Dp1 transitions in the order of the attachment information Im22 (disabling confirmation information Im23 as necessary) and the home screen Dp11 similarly to that at the time of normal startup.

On the other hand, when the setting fails, the display processing unit 13 displays the third image Im13 instead of the first image Im11 on the display unit 23 of the display device 2 as illustrated in the lower right of Fig. 14. At this time, the display processing unit 13 displays the third image Im13 superimposed on the home screen Dp11. The third image Im13 is superimposed and displayed on the home screen Dp11 by a pop-up window in the second region R2 of the home screen Dp 11. That is, the third image Im13 is displayed superimposed on the home screen Dp11 by pop-up display. In this state, when the display duration (for example, 3 seconds) of the third image Im13 elapses, the display processing unit 13 displays the specific information Im21, similar to that at the time of normal startup, superimposed on the home screen Dp11 as illustrated in the lower left of Fig. 14. Thereafter, the display screen Dp1 transitions in the order of the attachment information Im22 (disabling confirmation information Im23 as necessary) and the home screen Dp11 similarly to that at the time of normal startup.

As described above, the control method according to the present embodiment is a control method of the working machine 3 having the interference avoidance function of controlling the operation of the working unit 33 so as to avoid the interference of the working unit 33 with the driving unit 321. This control method includes executing the disabling startup processing of enabling the working unit 33 to operate in a state where the interference avoidance function is disabled when the specific condition including that the first manipulation is performed at the time of startup of the working machine 3 by the startup manipulation is satisfied.

According to this configuration, the interference avoidance function is disabled when the specific condition including that the first manipulation is performed at the time of startup of the working machine 3 by the startup manipulation of the operator is satisfied. Therefore, it is possible to avoid a situation in which the interference avoidance function is disabled without the intention of the operator, and it is possible by the manipulation of the operator to prevent the movement of the working machine 3 not intended by the operator (the approaching of the bucket very close to the driving unit 321). As a result, there is an advantage that it is easy to suppress the movement of the working machine 3 not intended by the operator.

Moreover, the control method according to the present embodiment further includes confirming the presence or absence of the first manipulation at the time of startup of the working machine 3 by the startup manipulation in order to determine whether or not the specific condition is satisfied. That is, since the specific condition includes that the first manipulation is performed at the time of startup of the working machine 3 by the startup manipulation, it is confirmed whether or not the first manipulation (manipulation of the approval switch 391) is performed at the time of startup of the working machine 3 by the startup manipulation (on manipulation of the main switch 34).

As a result, the specific condition is satisfied only after the operator intentionally performs the first manipulation at the time of startup of the working machine 3, and it is possible to avoid the situation in which the interference avoidance function is disabled without the intention of the operator.

Moreover, the specific condition further includes that a second manipulation is performed after the working machine 3 is started up.

That is, the specific condition is not satisfied only when the first manipulation is performed at the time of startup of the working machine 3 by the startup manipulation. As a result, the specific condition is satisfied only after the operator intentionally performs the first manipulation at the time of startup of the working machine 3 and performs the second manipulation after the startup, and it is possible to avoid the situation in which the interference avoidance function is disabled without the intention of the operator.

Here, the first manipulation includes a manipulation of a first manipulation unit (cancellation switch 392) different from a startup manipulation unit (main switch 34) for the startup manipulation. Furthermore, the second manipulation includes a manipulation of a second manipulation unit (approval switch 391) different from the first manipulation unit (cancellation switch 392). That is, the main switch 34 is an example of the startup manipulation unit, the cancellation switch 392 is an example of the first manipulation unit, and the approval switch 391 is an example of the second manipulation unit.

As a result, the specific condition is satisfied only after the operator performs the first manipulation on the first manipulation unit different from the startup manipulation unit and performs the second manipulation on the second manipulation unit different from the first manipulation unit after the startup, and it is possible to avoid the situation in which the interference avoidance function is disabled without the intention of the operator.

Here, regardless of the state of the locking device capable of switching between the locked state in which the operation of the working machine 3 is restricted and the unlocked state in which the operation of the working machine 3 is not restricted, the working machine 3 can be started up by the startup manipulation. That is, regardless of whether the cutoff lever 372 is at the "raised position" and the locking device is in the "locked state" or the cutoff lever 372 is at the "lowered position" and the locking device is in the "unlocked state", the working machine 3 can be started up.

On the other hand, the second manipulation includes that the locking device capable of switching between the locked state in which the operation of the working machine 3 is restricted and the unlocked state in which the operation of the working machine 3 is not restricted is in the locked state. That is, the disabling startup processing by the second manipulation can be performed only in a state where the cutoff lever 372 is at the "raised position" and the locking device is in the "locked state". Therefore, when the cutoff lever 372 is at the "lowered position" and the locking device is in the "unlocked state", even if the approval switch 391 is manipulated (pressmanipulated), it does not mean that the second manipulation has been performed, and the disabling of the interference avoidance function fails.

As a result, the interference avoidance function can be disabled only in the locked state in which the operation of the working machine 3 is restricted, and as a result, it is more reliably possible to avoid the situation in which the interference avoidance function is disabled without the intention of the operator.

Moreover, the control method according to the present embodiment further includes displaying, on the display device 2, the first image Im11 serving as guidance for the second manipulation after the startup of the working machine 3. As a result, since the interference avoidance function is disabled only after the second manipulation (specific manipulation) guided by the first image Im11 is performed, it is possible to avoid the situation in which the interference avoidance function is disabled without the intention of the operator.

Here, the control method according to the present embodiment further includes displaying, on the display device 2, an execution result of the disabling startup processing after displaying the first image Im11. That is, the second image Im12 indicating that the disabling of the interference avoidance function has succeeded and/or the third image Im13 indicating that the disabling of the interference avoidance function has failed are/is displayed on the display device 2 as the execution result of the disabling startup processing. In the present embodiment, as an example, the second image Im12 in a case where the setting has succeeded is not displayed, and only the third image Im13 in a case where the setting has failed is displayed.

As a result, the operator can know the execution result of the disabling startup processing, so that it is possible to prevent an unintended result of the operator.

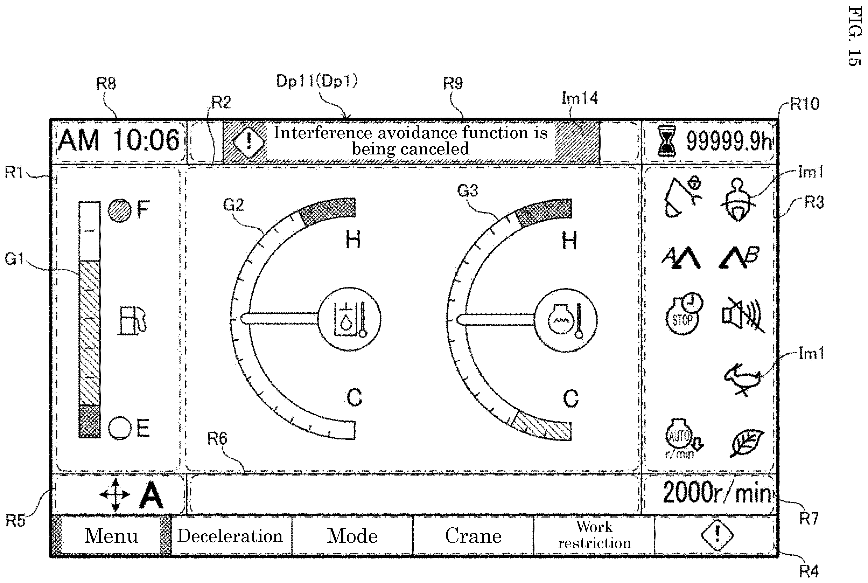

Moreover, the control method according to the present embodiment further includes performing informing when the interference avoidance function is disabled. Specifically, as illustrated in Fig. 15, while the interference avoidance function is disabled, the display processing unit 13 performs informing by displaying a fourth image Im14 in the ninth region R9 of the home screen Dp11. The fourth image Im14 is an image indicating that the interference avoidance function is disabled, and includes, for example, a message (text) such as "interference avoidance function is being canceled". As a result, the operator can easily grasp that the interference avoidance function is disabled, and can easily suppress the movement of the working machine 3 not intended by the operator. The informing means may be, for example, the fourth image Im14 or other display, or may be sound output by the sound output unit 36.

Meanwhile, the interference avoidance function disabled by the disabling startup processing is enabled again when the working machine 3 is re-started up. That is, when the working machine 3 is temporarily stopped by the off manipulation of the main switch 34 and then the working machine 3 is started up (re-started up) by the on manipulation (startup manipulation) of the main switch 34 from the state where the interference avoidance function is disabled by the disabling startup processing, the interference avoidance function is enabled. However, when the first manipulation (the manipulation of the cancellation switch 392) is performed also at the time of re-startup, the interference avoidance function is disabled by the disabling startup processing also at the time of re-startup.

As described above, the condition for enabling the interference avoidance function after the execution of the disabling startup processing includes at least the re-startup of the working machine 3. That is, in order to enable the interference avoidance function disabled by the disabling startup processing, it is necessary to temporarily stop the working machine 3 at least by the off manipulation of the main switch 34 or the like. Therefore, it is possible to avoid switching of the enabling/disabling of the interference avoidance function during work by the working machine 3.

### [5] Modifications

Hereinafter, modifications of the first embodiment will be listed. The modifications described below can be applied in combination as appropriate.

The control system 1 in the present disclosure includes a computer system. The computer system mainly includes one or more processors and one or more memories as hardware. The processor executes a program recorded in the memory of the computer system to realize a function as the control system 1 in the present disclosure. The program may be prerecorded in the memory of the computer system, may be provided through a telecommunication line, or may be recorded and provided in a non-transitory recording medium, such as a memory card, an optical disk, or a hard disk drive, that is readable by the computer system. Moreover, a part or all of the functional units included in the control system 1 may include an electronic circuit.

Moreover, it is not essential for the control system 1 that at least some functions of the control system 1 are aggregated in one housing, and the components of the control system 1 may be provided in a plurality of housings in a distributed manner. Conversely, in the first embodiment, functions distributed to a plurality of devices (for example, the control system 1 and the display device 2) may be aggregated in one housing. Furthermore, at least some functions of the control system 1 may be realized by a cloud (cloud computing) or the like.

Moreover, the power source of the working machine 3 is not limited to the diesel engine, and may be, for example, an engine other than the diesel engine, a motor (electric motor), or a hybrid power source including the engine and the motor (electric motor).

Moreover, the display device 2 is not limited to a dedicated device, and may be, for example, a general-purpose terminal such as a laptop computer, a tablet terminal, or a smartphone. Furthermore, the display unit 23 is not limited to a mode of directly displaying a display screen as in a liquid crystal display or an organic EL display, and may be, for example, configured to display the display screen by projection as in a projector.

Moreover, as an information input mode of the manipulation unit 22, a mode other than the push button switch, the touch panel, and the manipulation dial may be adopted. For example, the manipulation unit 22 may employ a mode such as a keyboard, a pointing device such as a mouse, a sound input, a gesture input, or an input of a manipulation signal from another terminal.

Moreover, the manipulation device 35, the display device 2, and the like are not limited to the configuration mounted on the machine body 30, and may be provided, for example, separately from the machine body 30. In this case, the manipulation device 35, the display device 2, and the like are configured to be able to communicate with the machine body 30, and realize remote control of the machine body 30.

### [Additional Note of Invention]

Hereinafter, an outline of the invention extracted from the above-described embodiments will be additionally described. Note that configurations and processing functions described in the following additional notes can be selected and freely combined.

### <Additional Note 1>

A control method of a working machine capable of replacing an attachment of a working unit, the control method including
displaying, on a display device, attachment information related to the attachment being mounted at a time of startup of the working machine by a startup manipulation.

### <Additional Note 2>

The control method of the working machine according to Additional Note 1, further including
adjusting, based on the attachment information, an interference avoidance function of controlling an operation of the working unit so as to avoid interference of the working unit with a driving unit.

### <Additional Note 3>

The control method of the working machine according to Additional Note 1 or 2, in which
the working machine can operate even while the attachment information is displayed.

### <Additional Note 4>

The control method of the working machine according to any one of Additional Notes 1 to 3, further including
displaying, on the display device, a home screen after displaying the attachment information.

### <Additional Note 5>

The control method of the working machine according to any one of Additional Notes 1 to 4, further including
reading the attachment information into the display device at the time of startup of the working machine.

### <Additional Note 6>

The control method of the working machine according to Additional Note 5, further including
performing informing when the reading of the attachment information fails.

### <Additional Note 7>

The control method of the working machine according to any one of Additional Notes 1 to 6, in which
the attachment information is displayed after displaying a start screen that is first displayed on the display device after the startup of the working machine.

### <Additional Note 8>

The control method of the working machine according to Additional Note 7, in which
the attachment information is displayed after specific information is displayed after displaying the start screen.

### <Additional Note 9>

The control method of the working machine according to Additional Note 8, further including
changing a manipulation pattern, which is a correspondence relationship between a manipulation of a manipulation device and an operation of the working machine, in which
the specific information is information related to a current manipulation pattern.

### <Additional Note 10>

The control method of the working machine according to any one of Additional Notes 1 to 9, further including:
executing automatic disabling processing of automatically disabling a specific function related to the working machine when a cancellation condition including that a stop manipulation of the working machine is performed in a state where the specific function is enabled is satisfied; and
displaying, on the display device, disabling confirmation information indicating that the specific function is disabled after the startup of the working machine by the startup manipulation after executing the automatic disabling processing.

### <Additional Note 11>

The control method of the working machine according to Additional Note 10, in which
the cancellation condition includes a condition other than the stop manipulation of the working machine.

### <Additional Note 12>

The control method of the working machine according to Additional Note 10 or 11, in which
the disabling confirmation information is displayed only at a time of first startup of the working machine after executing the automatic disabling processing.

<Additional Note 13>

The control method of the working machine according to any one of Additional Notes 10 to 12, in which
the disabling confirmation information is displayed next to the attachment information.

### <Additional Note 14>

The control method of the working machine according to any one of Additional Notes 1 to 13, in which
the attachment information is displayed on the display device together with operating information related to an operating state of the working machine.

### <Additional Note 15>

A working machine control program for causing one or more processors to execute
the control method of the working machine according to any one of Additional Notes 1 to 14.

### <Additional Note 16>

A control method of a working machine, including:
executing automatic disabling processing of automatically disabling a specific function related to the working machine when a cancellation condition including that a stop manipulation of the working machine is performed in a state where the specific function is enabled is satisfied; and
displaying, on a display device, disabling confirmation information indicating that the specific function is disabled after startup of the working machine by a startup manipulation after executing the automatic disabling processing.

### LIST OF REFERENCE SIGNS

- 1: Working machine control system
- 2: Display device
- 3: Working machine
- 13: Display processing unit
- 30: Machine body
- 33: Working unit
- 35: Manipulation Device
- 331: Attachment
- Dp10: Start screen
- Dp11: Home Screen
- Im1: Icon (operating information)
- Im21: Specific information
- Im22: Attachment information
- Im23: Disabling confirmation information

## Claims

1. A control method of a working machine capable of replacing an attachment of a working unit, the control method comprising
displaying, on a display device, attachment information related to the attachment being mounted at a time of startup of the working machine by a startup manipulation.

2. The control method of the working machine according to claim 1, further comprising
adjusting, based on the attachment information, an interference avoidance function of controlling an operation of the working unit so as to avoid interference of the working unit with a driving unit.

3. The control method of the working machine according to claim 1 or 2, wherein
the working machine can operate even while the attachment information is displayed.

4. The control method of the working machine according to claim 1 or 2, further comprising
displaying, on the display device, a home screen after displaying the attachment information.

5. The control method of the working machine according to claim 1 or 2, further comprising
reading the attachment information into the display device at the time of startup of the working machine.

6. The control method of the working machine according to claim 5, further comprising
performing informing when the reading of the attachment information fails.

7. The control method of the working machine according to claim 1 or 2, wherein
the attachment information is displayed after displaying a start screen that is first displayed on the display device after the startup of the working machine.

8. The control method of the working machine according to claim 7, wherein
the attachment information is displayed after specific information is displayed after displaying the start screen.

9. The control method of the working machine according to claim 8, further comprising
changing a manipulation pattern, which is a correspondence relationship between a manipulation of a manipulation device and an operation of the working machine, wherein
the specific information is information related to a current manipulation pattern.

10. The control method of the working machine according to claim 1 or 2, further comprising:
executing automatic disabling processing of automatically disabling a specific function related to the working machine when a cancellation condition including that a stop manipulation of the working machine is performed in a state where the specific function is enabled is satisfied; and
displaying, on the display device, disabling confirmation information indicating that the specific function is disabled after the startup of the working machine by the startup manipulation after executing the automatic disabling processing.

11. The control method of the working machine according to claim 10, wherein
the cancellation condition includes a condition other than the stop manipulation of the working machine.

12. The control method of the working machine according to claim 10, wherein
the disabling confirmation information is displayed only at a time of first startup of the working machine after executing the automatic disabling processing.

13. The control method of the working machine according to claim 10, wherein
the disabling confirmation information is displayed next to the attachment information.

14. The control method of the working machine according to claim 1 or 2, wherein
the attachment information is displayed on the display device together with operating information related to an operating state of the working machine.

15. A working machine control program for causing one or more processors to execute
the control method of the working machine according to claim 1 or 2.

16. A working machine control system used for a working machine capable of replacing an attachment of a working unit, the working machine control system comprising
a display processing unit that displays, on a display device, attachment information related to the attachment being mounted at a time of startup of the working machine by a startup manipulation.

17. A working machine comprising:
the working machine control system according to claim 16; and
a machine body.
